# EUROPÄISCHE PATENTSCHRIFT

(11) **EP 3 497 392 B1**
(45) Veröffentlichungstag und Bekanntmachung des Hinweises auf die Patenterteilung: **18.11.2020**
(21) Anmeldenummer: 17748746.9
(22) Anmeldetag: 03.08.2017
(51) Int. Cl.: F28F 3/08, B01J 8/00, C01C 1/04, F28D 9/00

(54) **VERWENDUNG EINES PLATTENWÄRMETAUSCHERS UND EINER SYNTHESEVORRICHTUNG UND VERFAHREN ZUR HERSTELLUNG EINES PRODUKTS**
USE OF A PLATE HEAT EXCHANGER AND OF A SYNTHESIS DEVICE, AND METHOD FOR PRODUCING A PRODUCT
UTILISATION D'UN ÉCHANGEUR DE CHALEUR À PLAQUES, D'UN DISPOSITIF DE SYNTHÈSE ET PROCÉDÉ DE FABRICATION D'UN PRODUIT

(30) Priorität: 09.08.2016 DE 102016114710
(43) Veröffentlichungstag der Anmeldung: 19.06.2019
(73) Patentinhaber: thyssenkrupp Industrial Solutions AG, 45143 Essen (DE); thyssenkrupp AG, 45143 Essen (DE)
(72) Erfinder: GORVAL, Evgeni, 44135 Dortmund (DE); JOHANNING, Joachim, 46045 Oberhausen (DE); MICHEL, Reinhard, 44797 Bochum (DE)
(74) Vertreter: thyssenkrupp Intellectual Property GmbH
(86) Internationale Anmeldenummer: PCT/EP2017/069683
(87) Internationale Veröffentlichungsnummer: WO 2018/029084

(56) Entgegenhaltungen:
- EP-A1- 1 623 755
- US-A- 4 470 454
- US-A1- 2010 170 666
- US-A1- 2014 060 789
- US-A1- 2015 047 817

## Beschreibung

Die Erfindung betrifft die Verwendung eines Plattenwärmetauschers mit mehreren Platten, wobei zwischen jeweils zwei benachbarten Platten ein durchströmbarer Zwischenraum gebildet ist, umfassend durchströmbare Zwischenräume einer ersten Gruppe, die in Fluidverbindung mit einem gemeinsamen, senkrecht zu den Platten verlaufenden ersten Fluidkanal stehen, wobei die Zwischenräume der ersten Gruppe derart abgedichtet sind, dass ein Einströmen eines ersten Fluids von außen her und/oder ein Ausströmen dieses ersten Fluids nach außen hin in einer Richtung parallel zu den Platten verhindert wird, wobei die Zwischenräume der ersten Gruppe in Fluidverbindung mit mehreren, senkrecht zu den Platten verlaufenden zweiten Fluidkanälen stehen, die derart angeordnet sind, dass das erste Fluid die Zwischenräume der ersten Gruppe, ausgehend von dem ersten Fluidkanal, quer zu den zweiten Fluidkanälen durchströmt, oder dass das erste Fluid die Zwischenräume der ersten Gruppe, ausgehend von den zweiten Fluidkanälen quer zu dem ersten Fluidkanal durchströmt, weiterhin umfassend von einem zweiten Fluid, welches anders temperiert ist als das erste Fluid, durchströmbare Zwischenräume einer zweiten Gruppe, wobei die Zwischenräume der ersten Gruppe und die Zwischenräume der zweiten Gruppe jeweils abwechselnd angeordnet sind und wobei die von dem zweiten Fluid durchströmbaren Zwischenräume der zweiten Gruppe nach außen hin, bezogen auf den Plattenwärmetauscher, offene seitliche Einströmöffnungen aufweisen, um ein Einströmen eines zweiten Fluids von außen her in die Zwischenräume der zweiten Gruppe aus einer parallel zu den Platten angeordneten Einströmrichtung zu ermöglichen.

Ferner betrifft die Erfindung eine Synthesevorrichtung für exotherme Reaktionen mit heterogener Katalyse, insbesondere Ammoniaksynthesekonverter, wobei die Synthesevorrichtung die folgenden Komponenten umfasst:
einen Druckbehälter,
ein erstes Katalysatorbett welches innerhalb des Druckbehälters angeordnet ist;
ein zweites Katalysatorbett, welches innerhalb des Druckbehälters unterhalb des ersten Katalysatorbetts angeordnet ist; und einen ersten Wärmetauscher oder eine Gruppe von ersten Wärmetauschern, welche(r) derart angeordnet ist (sind), dass ein aus dem ersten Katalysatorbett austretendes Produktfluid dem (den) ersten Wärmetauscher(n) zur Abgabe von Wärme zuleitbar ist, und nach der Abgabe der Wärme in dem (den) Wärmetauscher(n) dem zweiten Katalysatorbett zuleitbar ist, bei welcher als erste Wärmetauscher Plattenwärmetauscher der vorgenannten Art verwendet werden.

Gegenstand der vorliegenden Erfindung ist weiterhin ein Verfahren zur Herstellung eines Produkts bei dem Plattenwärmetauscher der vorgenannten Art verwendet werden.

Ammoniaksynthesekonverter umfassen üblicherweise mehrere Katalysatorbetten und Wärmetauscher, welche innerhalb eines Druckbehälters angeordnet sind.

Die DE 10 2006 061 847 A1 offenbart einen Ammoniaksynthesekonverter mit wenigstens einem im Wesentlichen radial durchströmten Katalysatorbett, welches einen Rohrbündelwärmetauscher konzentrisch umgibt. Mittels des Rohrbündelwärmetauschers wird die Reaktionswärme des aus dem Katalysatorbett ausströmenden Fluids auf Fluid übertragen, welches in das Katalysatorbett eingeleitet wird. Diese Art von Wärmetauscher beansprucht aufgrund der geringen Wärmestromdichte ein relativ großes Volumen pro übertragener Wärmeleistung, welches dementsprechend nicht für weiteres Katalysatormaterial zur Verfügung steht. Dies wirkt sich negativ auf den Durchsatz des Synthesekonverters aus. Für die wirtschaftliche Auslegung eines Ammoniak-Konverters ist eine optimale Nutzung des Reaktorvolumens erforderlich. Dazu gehört eine sinnvolle Volumen-Aufteilung zwischen den Katalysatorbetten, den Wärmetauschern und den Zuleitungswegen. Bedingt durch die in der Regel verhältnismäßig hohen Arbeitsdrücke der Synthesereaktoren sind Druckbehälter zudem teure Komponenten. Eine Minimierung der entsprechend teuren Druckbehältervolumina ist deshalb generell anzustreben.

Aus der US 3,743,011 A ist ein Wärmetauscher mit den Merkmalen der eingangs genannten Gattung bekannt, bei dem es sich um einen Ölkühler eines Verbrennungsmotors handelt. Das erste Fluid (hier Öl) strömt über einen ersten mittig angeordneten Fluidkanal ein, strömt von diesem dann nach Umlenkung um etwa 90° radial nach außen durch Zwischenräume der ersten Gruppe zwischen den Platten, strömt dann außen durch zweite Strömungskanäle etwa parallel zu dem ersten Strömungskanal, um dann wieder durch Zwischenräume zwischen den Platten von außen zurück zur Mitte hin zu strömen und nach erneuter Umlenkung durch einen weiteren mittigen Fluidkanal auszuströmen. Nach außen hin sind die Zwischenräume der ersten Gruppe geschlossen, so dass hier kein Fluid austreten kann. Das zweite Fluid (hier Wasser) fließt durch eine einzige Rohrleitung (Sammelleitung) in Zwischenräume der zweiten Gruppe ein, welche zwischen den Zwischenräumen der ersten Gruppe liegen. Diese Zwischenräume der zweiten Gruppe sind jedoch ebenfalls nach außen hin geschlossen, so dass dort das zweite Fluid weder austreten noch eintreten kann. Der gesamte etwa zylindrische Wärmetauscher ist außenseitig von einem geschlossenen zylindrischen Gehäuse umgeben.

Aus der EP 1 623 755 A1 ist ein Ammoniaksynthesekonverter bekannt, umfassend einen Druckbehälter, ein erstes Katalysatorbett, welches innerhalb des Druckbehälters angeordnet ist; ein zweites Katalysatorbett, welches innerhalb des Druckbehälters unterhalb des ersten Katalysatorbetts angeordnet ist; und einen ersten Wärmetauscher oder eine Gruppe von ersten Wärmetauschern, welche(r) derart angeordnet ist (sind), dass ein aus dem ersten Katalysatorbett austretendes Produktfluid dem (den) ersten Wärmetauscher(n) zur Abgabe von Wärme zuleitbar ist, und nach der Abgabe der Wärme in dem (den) Wärmetauscher(n) dem zweiten Katalysatorbett zuleitbar ist, wobei der erste Wärmetauscher oder die Gruppe von ersten Wärmetauschern als Plattenwärmetauscher ausgebildet ist (sind). Bei diesem bekannten Ammoniaksynthesekonverter befinden sich Plattenwärmetauscher innerhalb des Katalysatorbetts. Dies hat zur Folge, dass in dem Katalysatorbett eine Kühlung durch Wärmetausch stattfindet, so dass im Prinzip eine isotherme Reaktionsführung vorliegt.

In der Druckschrift US 2010/0170666 A1 wird ein Plattenwärmetauscher gemäss dem Oberbegriff des Patentanspruchs 1 mit mehreren Platten beschrieben, wobei zwischen jeweils zwei benachbarten Platten ein durchströmbarer Zwischenraum gebildet ist, wobei der Plattenwärmetauscher durchströmbare Zwischenräume einer ersten Gruppe umfasst, die in Fluidverbindung mit mehreren, senkrecht zu den Platten verlaufenden ersten Fluidkanälen stehen, wobei die Zwischenräume der ersten Gruppe derart abgedichtet sind, dass ein Einströmen eines ersten Fluids von außen her und/oder ein Ausströmen dieses ersten Fluids nach außen hin in einer Richtung parallel zu den Platten verhindert wird, wobei die Zwischenräume der ersten Gruppe in Fluidverbindung mit mehreren, senkrecht zu den Platten verlaufenden zweiten Fluidkanälen stehen, die derart angeordnet sind, dass das erste Fluid die Zwischenräume der ersten Gruppe, ausgehend von dem ersten Fluidkanal, quer zu den zweiten Fluidkanälen durchströmt, weiterhin umfassend von einem zweiten Fluid, welches anders temperiert ist als das erste Fluid, durchströmbare Zwischenräume einer zweiten Gruppe,
wobei die Zwischenräume der ersten Gruppe und die Zwischenräume der zweiten Gruppe jeweils abwechselnd angeordnet sind und wobei die von dem zweiten Fluid durchströmbaren Zwischenräume der zweiten Gruppe nach außen hin, bezogen auf den Plattenwärmetauscher, offene seitliche Einströmöffnungen aufweisen, um ein Einströmen eines zweiten Fluids von außen her in die Zwischenräume der zweiten Gruppe aus einer parallel zu den Platten angeordneten Einströmrichtung zu ermöglichen. Bei diesem bekannten Plattenwärmetauscher strömen das heiße Fluid und das kalte Fluid im Gegenstrom. 16 eingereicht

Die Aufgabe der vorliegenden Erfindung besteht darin, eine effektive Verwendung eines Plattenwärmetauschers zur Verfügung zu stellen, welcher sich insbesondere für den Wärmetausch in einer Synthesevorrichtung eignet, bei der in der Synthesevorrichtung ein zweites, anders temperiertes Fluid in unmittelbarer Umgebung des Plattenwärmetauschers, durch den das erste Fluid strömt, anfällt.

Diese Aufgabe wird durch die Verwendung eines Plattenwärmetauschers mit den Merkmalen des Anspruchs 1 gelöst.

Erfindungsgemäß weisen die von dem zweiten Fluid durchströmbaren Zwischenräume der zweiten Gruppe nach außen hin, bezogen auf den Plattenwärmetauscher, offene seitliche Einströmöffnungen auf, um ein Einströmen eines zweiten Fluids von außen her in die Zwischenräume der zweiten Gruppe aus einer parallel zu den Platten angeordneten Einströmrichtung zu ermöglichen. Bei dem erfindungsgemäßen Plattenwärmetauscher kann somit das zweite Fluid, beispielsweise ein heißes Fluid, welches in einer Synthesevorrichtung entsteht, unmittelbar von außen her in alle Zwischenräume der zweiten Gruppe einströmen und gelangt somit in einen Wärmetausch mit den Zwischenräumen der ersten Gruppe, durch die das erste, beispielsweise kühlere Fluid strömt, wobei die Zwischenräume der zweiten Gruppe und diejenigen der ersten Gruppe jeweils abwechselnd parallel nebeneinander liegen.

Dies ermöglicht einen sehr effektiven Wärmetausch und eine kompakte Bauweise, da keine Sammelleitungen vorgesehen sind, über die das zweite Fluid einströmt, von denen aus dann zunächst wieder eine Verteilung auf die Fluidkanäle der zweiten Zwischenräume notwendig wäre. Die erfindungsgemäßen Wärmetauscher eignen sich daher insbesondere gut zur Verwendung in Synthesevorrichtungen, in denen ein zweites, beispielsweise heißes Fluid in der Umgebung des Wärmetauschers entsteht, beispielsweise in Synthesevorrichtungen mit Katalysatorbetten, welche sich in der Synthesevorrichtung um einen oder mehrere Plattenwärmetauscher der erfindungsgemäßen Art herum erstrecken.

Bei der erfindungsgemäßen Lösung muss das heiße Fluid nicht umgelenkt werden, um in den Wärmetauscher einzuströmen, was viel Platz spart und einen Druckverlust vermeidet. Durch die seitliche Einströmung werden weniger, beispielsweise nur 3 Ports benötigt. Dadurch steht einerseits mehr Fläche für die Wärmeübertragung zur Verfügung und zweitens wird der Druckverlust deutlich reduziert, denn die Eintrittsgeschwindigkeit seitlich ist deutlich geringer als sie bei einem Eintritt quer zur Platte des Plattenwärmetauschers wäre.

Gegenstand der vorliegenden Erfindung ist weiterhin eine Synthesevorrichtung für exotherme Reaktionen mit heterogener Katalyse der eingangs genannten Art, bei der ein erster Wärmetauscher oder eine Gruppe von ersten Wärmetauschern als Plattenwärmetauscher mit den zuvor genannten Merkmalen ausgebildet ist (sind).

Ein erfindungsgemäßer Plattenwärmetauscher kann beispielsweise eine zylindrische Geometrie haben, er kann aber auch im Grundriss eckig sein. Anstelle einer Plattenwärmetauschers können auch mehrere Plattenwärmetauscher in einer gemeinsamen Anordnung verwendet werden, so dass diese Anordnung von mehreren Plattenwärmetauschern eine kompakte Anordnung mit insgesamt beispielsweise etwa zylindrischer Geometrie hat, wobei die Geometrie des einzelnen Wärmetauschers in dieser Gruppe von Wärmetauschern variabel ist. Beispielsweise kann man mehrere jeweils im Umriss sechseckige Wärmetauscher so anordnen, dass sie insgesamt eine Anordnung mit zylindrischer Geometrie ergeben, die dann von einem ringförmigen Katalysatorbett umgeben sein kann, in dem durch eine Reaktion ein heißen Fluid entsteht, welches dann aus dem Katalysatorbett nach radial innen und in den oder die Plattenwärmetauscher einströmt.

Wenn hierin der Begriff "außen" bzw. "von außen her" oder "nach außen hin" verwendet wird, bezogen auf den Plattenwärmetauscher oder die Gruppe von Plattenwärmetauschern, dann kann es sich um eine radiale Strömung des zweiten Fluids von außen nach innen handeln, wenn es sich um einen Plattenwärmetauscher oder eine Gruppe von Plattenwärmetauschern mit etwa zylindrischer Geometrie handelt. Ist der Plattenwärmetauscher hingegen im Umriss eckig, dann handelt es sich um eine Querströmung in den durchströmbaren Zwischenräumen von außen nach innen, bezogen auf den ersten Fluidkanal, durch den das erste Fluid einströmt. Dieser erste Fluidkanal liegt somit "innen" bezogen auf den Plattenwärmetauscher und dieser erste Fluidkanal verläuft senkrecht zu den durchströmbaren Zwischenräumen. Bei zylindrischer Geometrie des Plattenwärmetauschers verläuft der erste Fluidkanal in der Regel axial mittig und das zweite Fluid tritt in die durchströmbaren Zwischenräume von radial außen her in den Plattenwärmetauscher ein. Aber auch wenn der oder die Plattenwärmetauscher selbst im Umriss nicht rund sondern eckig sind, kann man von einer radialen Strömung von außen nach innen sprechen, bezogen auf die gesamte Synthesevorrichtung, die häufig die Geometrie eines im Wesentlichen zylindrischen Reaktors aufweist. Bei einer bevorzugten Variante der Erfindung befindet sich das Katalysatorbett, in dem die exotherme Reaktion mit heterogener Katalyse stattfindet, im äußeren Bereich der Synthesevorrichtung und der Plattenwärmetauscher liegt innerhalb des Katalysatorbetts und somit "innen" bezogen auf das Katalysatorbett. Jedoch kann der Plattenwärmetauscher grundsätzlich auch oberhalb oder unterhalb eines Katalysatorbetts in der Synthesevorrichtung angeordnet sind, wobei jedoch auch hier das Einströmen in die zweiten Zwischenräume von außen nach innen hin erfolgt, bezogen auf die Synthesevorrichtung.

Gemäß einer bevorzugten Weiterbildung der Erfindung strömt das zweite Fluid von (gegebenenfalls radial) außen her über die seitlichen Einströmöffnungen in den Plattenwärmetauscher ein und wird nach dem Durchströmen der Zwischenräume der zweiten Gruppe umgelenkt wird und strömt aus dem Plattenwärmetauscher über die dritten Fluidkanäle in achsparalleler Richtung, bezogen auf den Plattenwärmetauscher, aus diesem aus.

Gemäß einer bevorzugten Weiterbildung der Erfindung erstreckt sich der erste Fluidkanal, bezogen auf den Plattenwärmetauscher, mittig axial durch diesen hindurch, erstrecken sich die zweiten Fluidkanäle parallel zu dem ersten Fluidkanal und somit in achsparalleler Richtung, bezogen auf den Plattenwärmetauscher, im radial äußeren Bereich durch den Plattenwärmetauscher hindurch und die dritten Fluidkanäle erstrecken sich in radialer Richtung gesehen zwischen dem ersten Fluidkanal und den zweiten Fluidkanälen achsparallel durch den Plattenwärmetauscher hindurch, wobei sowohl die zweiten Fluidkanäle als auch die dritten Fluidkanäle zur Oberseite und/oder zur Unterseite des Plattenwärmetauschers hin offen ausgebildet sind, für den jeweiligen Austritt des Fluids.

Vorzugsweise weist das erste Fluid eine niedrigere Temperatur auf als das zweite Fluid. In diesem Fall entsteht zum Beispiel das zweite Fluid in der Synthesevorrichtung bei einer exothermen Reaktion, während das erste Fluid zur Kühlung des zweiten Fluids im Wärmetausch der Synthesevorrichtung von außen zugeführt werden kann. Dieses kühlere erste Fluid kann dann beispielsweise ein Eduktstrom sein, der der Synthesevorrichtung zugeführt wird, wobei sich der weitere Vorteil ergibt, dass man diesen Eduktstrom durch den Wärmetauschprozess vorwärmen kann, bevor er beispielsweise an einer Reaktion in einem Katalysatorbett teilnimmt.

Gemäß einer bevorzugten Weiterbildung sieht die vorliegende Erfindung im Prinzip zwei alternative Varianten vor. Bei der ersten Variante wird der Plattenwärmetauscher von dem ersten Fluid in den Zwischenräumen der ersten Gruppe und dem zweiten Fluid in den Zwischenräumen der zweiten Gruppe jeweils im Gleichstrom durchströmt und bei der zweiten Variante wird der Plattenwärmetauscher von dem ersten und dem zweiten Fluid jeweils im Gegenstrom durchströmt.

Der Plattenwärmetauscher weist im Vergleich zu einem Rohrbündelwärmetauscher gleicher Größe eine erhöhte Wärmestromdichte auf, so dass bei gleicher Wärmeleistung ein Wärmetauscher mit einem geringeren Volumen verwendet werden kann. Die durch den Einsatz des Plattenwärmetauschers entstehende Volumeneinsparung kann zur Vergrößerung des Volumens eines Katalysatorbetts genutzt werden, wodurch der Reaktionsdurchsatz und damit die Wirtschaftlichkeit der Synthesevorrichtung erhöht wird. Alternativ kann das Volumen des Druckbehälters, verringert werden, wodurch Produktions-, Bau- und/oder Montagekosten gespart werden können.

Die Zwischenräume der ersten Gruppe sind derart abgedichtet, dass ein Einströmen und/oder Ausströmen des ersten Fluids in einer Richtung parallel zu den Platten verhindert wird. Die zweiten Zwischenräume weisen seitliche Einströmöffnungen auf, um ein Einströmen des zweiten Fluids in die zweiten Zwischenräume aus einer parallel zu den Platten angeordneten Einströmrichtung zu ermöglichen. Somit wird es möglich, den Plattenwärmetauscher derart anzuordnen, dass ein aus dem Katalysatorbett austretendes, erwärmtes Produktfluid unmittelbar in die Einströmöffnungen des Plattenwärmetauschers einströmt. Zusätzliche Einrichtungen, beispielsweise Rohrleitungen, zur Führung des aus dem Katalysatorbett austretenden Produktfluids in den Plattenwärmetauscher sind daher nicht erforderlich, wodurch eine effiziente Ausnutzung des zur Verfügung stehenden Volumens innerhalb eines Druckbehälters einer Synthesevorrichtung möglich wird. Die Wirtschaftlichkeit der Synthesevorrichtung wird somit zusätzlich erhöht.

Der Plattenwärmetauscher umfasst bevorzugt mindestens drei Platten, welche jeweils so zueinander angeordnet sind, dass die Längsausdehnungen der Platten parallel zueinander ausgerichtet sind. Besonders bevorzugt sind die Platten deckungsgleich angeordnet. Bevorzugt weisen die einzelnen Platten eine Dicke im Bereich von 0,5 mm bis 4 mm auf, bevorzugter im Bereich von 0,7 mm bis 3,5 mm, im Bereich von 0,8 mm bis 3 mm, im Bereich von 0,9 mm bis 2,5 mm, im Bereich von 1,0 mm bis 2,0 mm oder im Bereich von 1,0 mm bis 1,5 mm. Der Abstand zwischen zwei benachbarten Platten liegt bevorzugt im Bereich von 5 mm bis 40 mm, bevorzugter im Bereich von 6 mm bis 35 mm, im Bereich von 7 mm bis 30 mm, im Bereich von 8 mm bis 25 mm, im Bereich von 9 mm bis 20 mm oder im Bereich von 10 mm bis 15 mm Bevorzugt werden durch den Abstand zwischen den Platten jeweils durchströmbare Zwischenräume gebildet, welche jeweils ausschließlich von einem der jeweiligen Fluide durchströmt werden.

Die Platten sind gemäß einer vorteilhaften Ausgestaltung aus einem Material ausgebildet, welches Nickel aufweist, so dass die Widerstandsfähigkeit der Platten gegenüber einer Nitrierung, insbesondere bei einer Temperatur oberhalb von 400°C, erhöht wird. Bevorzugt ist der Gehalt an Nickel in dem Material der Platten größer als 30 Gew.-%, besonders bevorzugt größer als 35% Gew-%, beispielsweise größer als 40 Gew.-%.

Bevorzugt weisen die einzelnen Platten ein Muster auf, welches die Wärmeübertragung jeweils verbessert bzw. die Strömungsverteilung entlang der Platten vergleichmäßigt. Dazu können die Platten beispielsweise eine geriffelte Oberfläche aufweisen, wodurch die Oberfläche der einzelnen Platten vergrößert wird. Des Weiteren kann ein wellenförmiges Profil einer Platte als eine Stütze der benachbarten Platten dienen und dadurch die gesamte Stabilität des Wärmetauschers erhöhen.

Bevorzugt ist der gemeinsame, erste Fluidkanal zu den Zwischenräumen der zweiten Gruppe hin abgedichtet. Bevorzugt liegt der Durchmesser des ersten Fluidkanals im Bereich von 10 cm bis 60 cm, bevorzugter im Bereich von 15 cm bis 50 cm, im Bereich von 20 cm bis 40 cm, im Bereich von 25 cm bis 35 cm oder im Bereich von 30 cm bis 40 cm. Bevorzugt ist der erste Fluidkanal so ausgelegt, dass er den ganzen Plattenwärmetauscher durchdringt, jedoch an einer der beiden Enden abgedichtet sein kann. Bevorzugt ist der erste Fluidkanal zentral entlang der Längsachse des Plattenwärmetauschers angeordnet, so dass der erste Fluidkanal jeweils durch die geometrischen Mittelpunkte der einzelnen Platten verläuft. Bevorzugt ist der erste Kanal dazu konfiguriert, das erste Fluid in den Plattenwärmetauscher einzuleiten oder aus diesem auszuleiten.

Bevorzugt sind die Zwischenräume der ersten Gruppe und die Zwischenräume der zweiten Gruppe jeweils abwechselnd angeordnet. Dementsprechend können die Zwischenräume der ersten Gruppe von dem ersten Fluid und die Zwischenräume der zweiten Gruppe von dem zweiten Fluid durchströmt werden.

Bevorzugt weisen die einzelnen Platten jeweils eine runde Form auf. Beispielsweise können die Platten kreisförmig ausgebildet sein. Bevorzugt liegt der Durchmesser der einzelnen Platten im Bereich von 50 cm bis 250 cm, bevorzugter im Bereich von 75 cm bis 225 cm oder im Bereich von 100 cm bis 200 cm. Die runde Form der Platten ist besonders vorteilhaft, da bei einer hohlzylindrischen Form der Katalysatorbetten ein Plattenwärmetauscher mit runden Platten besonders leicht in den Innenraum der hohlzylindrischen Katalysatorbetten eingebaut werden kann und eine symmetrische Anordnung die angestrebte gleichmäßige Strömungsverteilung begünstigt.

Eine vorteilhafte Ausgestaltung sieht vor, dass die Zwischenräume der ersten Gruppe entlang einer äußeren Umfangslinie der runden Platten abgedichtet sind. Durch die Abdichtung kann ein Ausströmen des ersten Fluids aus dem Bereich zwischen den Platten verhindert werden. Da die Abdichtung an der äußeren Umfangslinie vorgesehen ist, kann im Wesentlichen die gesamte Fläche der Platten als Wärmeaustauchfläche Verwendung finden

In einer bevorzugten Ausführungsform stehen die Zwischenräume der ersten Gruppe in Fluidverbindung mit mehreren, senkrecht zu den Platten verlaufenden zweiten Fluidkanälen, die derart angeordnet sind, dass ein Fluid die Zwischenräume der ersten Gruppe, ausgehend von dem ersten Fluidkanal, radial zu den zweiten Fluidkanälen durchströmt, oder dass das erste Fluid die Zwischenräume der ersten Gruppe, ausgehend von den zweiten Fluidkanälen radial zu dem ersten Fluidkanal durchströmt.

Bevorzugt stehen die zweiten Fluidkanäle über die Zwischenräume der ersten Gruppe in Fluidverbindung untereinander und mit dem ersten Fluidkanal. Bevorzugt sind die zweiten Fluidkanäle alle parallel zueinander und zum ersten Fluidkanal hin ausgerichtet. Bevorzugt weisen die zweiten Fluidkanäle alle die gleiche Form und die gleichen Abmessungen auf, z.B. den gleichen Durchmesser im Fall eines runden Querschnitts. Bevorzugt liegt der Durchmesser der zweiten Fluidkanäle, im Fall eines runden Querschnitts, im Bereich von 1 bis 25 cm, bevorzugter im Bereich 2 bis 20 cm, im Bereich von 3 bis 19 cm oder im Bereich von 4 bis 18 cm. Bevorzugt umfasst der Plattenwärmetauscher mindestens 4 zweite Fluidkanäle, bevorzugter mindestens 8, noch bevorzugter mindestens 12, noch bevorzugter mindestens 16, bevorzugter mindestens 20 oder mindestens 24. Die zweiten Fluidkanäle sind bevorzugt am äußeren Rand des Plattenwärmetauschers angeordnet. Der Abstand zwischen den Längsachsen der zweiten Fluidkanäle im Fall eines runden Querschnitts bzw. den Mittelpunkten der zweiten Fluidkanäle im Fall eines komplizierteren Querschnitts und dem seitlichen Rand des Plattenwärmetauschers ist bevorzugt bei allen zweiten Fluidkanälen gleich groß und liegt im Bereich von 0,5 bis 5 cm, bevorzugter im Bereich von 1 bis 3 cm. Bevorzugt strömt das erste Fluid, bevorzugt das *"kältere"* Fluid, über den ersten Fluidkanal in den Plattenwärmetauscher, durchströmt die Zwischenräume der ersten Gruppe radial vom ersten Fluidkanal zu den zweiten Fluidkanälen, also bevorzugt radial von innen nach außen, und verlässt den Plattenwärmetauscher über die zweiten Fluidkanäle. Man spricht bei dieser Anordnung von der "Gegenstrom-Wärmeübertragung". In einer anderen bevorzugten Ausführungsform strömt das erste Fluid, bevorzugt das *"kältere"* Fluid, über die zweiten Fluidkanäle in den Plattenwärmetauscher, durchströmt die Zwischenräume der ersten Gruppe radial von den zweiten Fluidkanälen zum ersten Fluidkanal, also bevorzugt von außen nach innen, und verlässt den Plattenwärmetauscher über den ersten Fluidkanal. Man spricht bei dieser Anordnung von der "Gleichstrom-Wärmeübertragung".

Bevorzugt stehen die Zwischenräume der zweiten Gruppe in Fluidverbindung mit mehreren, senkrecht zu den Platten verlaufenden dritten Fluidkanälen, die derart angeordnet sind, dass das Fluid die Zwischenräume der zweiten Gruppe, ausgehend von den seitlichen Einströmöffnungen, radial zu den dritten Fluidkanälen durchströmt.

Bevorzugt stehen die dritten Fluidkanäle über die Zwischenräume der zweiten Gruppe in Fluidverbindung untereinander und mit den Einströmöffnungen. Bevorzugt sind die dritten Fluidkanäle alle parallel zueinander sowie zum ersten Fluidkanal und zu den zweiten Fluidkanälen hin ausgerichtet Bevorzugt weisen die dritten Fluidkanäle alle die gleiche Form und die gleichen Abmessungen auf, z.B. den gleichen Durchmesser im Fall eines runden Querschnitts. Bevorzugt liegt der Durchmesser der dritten Fluidkanäle im Bereich von 5 bis 20 cm, bevorzugter im Bereich von 6 bis 19 cm, im Bereich von 7 bis 18 cm, im Bereich von8 bis 18 cm, im Bereich von 10 bis 18 cm oder im Bereich von 12 bis 16 cm. Bevorzugt umfasst der Plattenwärmetauscher mindestens 4 dritte Fluidkanäle, bevorzugter mindestens 6, mindestens 8, mindestens 10, mindestens 12 oder mindestens 16. Wenn der erste Fluidkanal entlang der zentralen Längsachse des Plattenwärmetauschers angeordnet ist, sind die dritten Fluidkanäle bevorzugt am inneren Rand des Plattenwärmetauschers um den ersten Fluidkanal herum angeordnet. Der minimale Abstand zwischen den dritten Fluidkanälen und dem ersten Fluidkanal ist dann bevorzugt bei allen dritten Fluidkanälen gleich groß und liegt bevorzugt im Bereich von 0,5 bis 5 cm, bevorzugter im Bereich von 1 bis 3 cm. Bevorzugt strömt ein Fluid, bevorzugt das *"wärmere"* Fluid, über die seitlichen Einströmöffnungen in die Zwischenräume der zweiten Gruppe, durchströmt diese bevorzugt radial von außen nach innen, und verlässt den Plattenwärmetauscher über die dritten Fluidkanäle.

Bevorzugt weisen der erste Fluidkanal und/oder die zweiten Fluidkanäle und/oder die dritten Fluidkanäle einen kreisrunden Querschnitt auf. Besonders bevorzugt sind die Durchmesser der dritten Fluidkanäle größer als die Durchmesser der zweiten Fluidkanäle. Das Verhältnis der Durchmesser der dritten Fluidkanäle zum Durchmesser der zweiten Fluidkanäle liegt bevorzugt im Bereich von 2:1 bis 1,1:1, bevorzugter im Bereich von 1,5:1 bis 1,1:1. Alternativ weisen die zweiten Fluidkanäle und/oder die dritten Fluidkanäle einen ovalen oder V-förmigen Querschnitt auf. In dem Fall, dass die die zweiten und die dritten Fluidkanäle einen ovalen oder V-förmigen Querschnitt aufweisen, liegt das Verhältnis der Fläche des Kanalquerschnitts der dritten Fluidkanäle zu der der zweiten Fluidkanäle bevorzugt im Bereich von 4:1 bis 1,2:1, bevorzugter im Bereich von 2,3:1 bis 1,2:1.

Die für eine Ammoniak-Synthese erforderlichen Bedingungen von hohen Volumenströmen bedingen bei möglichst geringen Platzverhältnissen innerhalb eines Plattenwärmetauschers ggf. hohe Geschwindigkeiten der Fluide, was ggf. zu hohen Druckverlusten innerhalb der Zuleitungsrohre führen kann.

Bevorzugt sind die Abmessungen der Zwischenräume derart beschaffen, dass der Druckverlust der Fluide beim Durchströmen des Plattenwärmetauschers höchstens 4 bar beträgt, bevorzugter höchstens 3 bar, 2 bar, 1 bar oder 0,5 bar.

Bevorzugt beträgt der Druckunterschied zwischen zwei Fluiden, welche durch den Plattenwärmetauscher strömen, höchstens 5 bar, bevorzugter höchstens 4 bar, 3 bar, 2 bar oder höchstens 1 bar.

Eine bevorzugte Ausgestaltung sieht vor, dass der Plattenwärmetauscher einen Einlass für das erste Fluid und einen Quenchfluideinlass aufweist, über welchen ein Quenchfluid derart in den Plattenwärmetauscher einleitbar ist, dass es sich innerhalb des Plattenwärmetauschers mit dem ersten Fluid vermischen kann. Das Quenchfluid kann eine geringere Temperatur als das erste Fluid aufweisen, so dass durch das Mischen ein Mischfluid mit einer gegenüber der Temperatur des ersten Fluids reduzierten Temperatur erhalten werden kann.

In diesem Zusammenhang ist es bevorzugt, wenn der Quenchfluideinlass mit einem Quenchkanal verbunden ist, welcher konzentrisch in dem ersten Fluidkanal angeordnet ist und welcher Öffnungen aufweist, durch welche das Quenchfluid in den ersten Fluidkanal ausströmen kann.

Ein zweiter Aspekt der vorliegenden Erfindung betrifft eine Synthesevorrichtung für exotherme Reaktionen mit heterogener Katalyse, insbesondere einen Ammoniaksynthesekonverter, wobei die Synthesevorrichtung die folgenden Komponenten umfasst:
einen Druckbehälter,
ein erstes Katalysatorbett, welches innerhalb des Druckbehälters angeordnet ist;
ein zweites Katalysatorbett, welches innerhalb des Druckbehälters unterhalb des ersten Katalysatorbetts angeordnet ist; und
einen ersten Wärmetauscher oder eine Gruppe von ersten Wärmetauschern, welche(r) derart angeordnet ist (sind), dass ein aus dem ersten Katalysatorbett austretendes Produktfluid dem ersten Wärmetauscher oder der Gruppe von ersten Wärmetauschern zur Abgabe von Wärme zuleitbar ist, und nach der Abgabe der Wärme in dem Wärmetauscher oder der Gruppe von Wärmetauschern dem zweiten Katalysatorbett zuleitbar ist;
wobei der erste Wärmetauscher oder die Gruppe von ersten Wärmetauschern als ein vorstehend beschriebener Plattenwärmetauscher ausgebildet ist (sind).

Bei der erfindungsgemäßen Synthesevorrichtung können dieselben Vorteile erreicht werden, wie sie bereits im Zusammenhang mit dem Plattenwärmetauscher beschrieben worden sind.

Der Druckbehälter weist bevorzugt eine zylindrische Form mit einer vertikal ausgerichteten Längsachse auf. Der Einlass des Druckbehälters ist bevorzugt am oberen Ende des Druckbehälters und der Auslass am unteren Ende des Druckbehälters angeordnet. Der Druckbehälter wird bevorzugt bei einem Druck im Bereich von 90 bis 400 bar betrieben. Der Begriff *"Fluid"* umfasst dabei bevorzugt Gase und Flüssigkeiten.

Bevorzugt basiert die Synthesevorrichtung auf einer radialen Durchströmung der Katalysatorbetten, wobei die Katalysatorbetten bevorzugt die Form von Hohlzylindern aufweisen. Bevorzugt erfolgt die Zuführung der Fluide über zylindrische Mantelflächen der Katalysatorbetten. Die Fluide können die Katalysatorbetten sowohl radial von außen nach innen als auch radial von innen nach außen durchströmen. Innerhalb der Synthesevorrichtung können alle Katalysatorbetten radial von außen nach innen oder alle Katalysatorbetten radial von innen nach außen durchströmt werden. Ebenso kann innerhalb der Synthesevorrichtung mindestens ein Katalysatorbett radial von innen nach außen und mindestens ein anderes Katalysatorbett radial von außen nach innen durchströmt werden.

Bevorzugt ist der Plattenwärmetauscher nicht innerhalb eines Katalysatorbetts angeordnet, so dass eine Beeinträchtigung des Wärmetauschers durch die Katalysatorschüttung nicht zu befürchten steht.

Bevorzugt umfasst die Synthesevorrichtung mehrere Wärmetauscher. Es ist möglich, dass mehrere Wärmetauscher einem gemeinsamen Katalysatorbett zugeordnet sind, um das in das Katalysatorbett einströmende Fluid vorzuwärmen. Alternativ können mehrere Wärmetauscher vorgesehen sein, die jeweils einem Katalysatorbett zugeordnet sind, so dass das in das jeweilige Katalysatorbett einströmende Fluid über genau einen Wärmetauscher vorgewärmt wird. Die Wärmetauscher können alle als Plattenwärmetauscher mit den oben genannten Merkmalen ausgebildet sein.

Gemäß der Erfindung ist das erste Katalysatorbett ringförmig ausgebildet und umgibt den als Plattenwärmetauscher ausgebildeten ersten Wärmetauscher oder die Gruppe von ersten Wärmetauschern konzentrisch. Das erste Katalysatorbett kann derart angeordnet sein, dass es radial von außen nach innen durchströmbar ist und ein an der Innenkontur des ringförmigen, ersten Katalysatorbetts austretendes Produktfluid unmittelbar den Einströmöffnungen des ersten Plattenwärmetauschers oder der Gruppe von ersten Plattenwärmetauschern zugeleitet wird. Bevorzugt strömt das aus dem Katalysatorbett ausströmende Fluid unmittelbar, bevorzugt seitlich, in den Wärmetauscher ein. Dabei ist dieses aus dem Katalysatorbett radial innenseitig austretende Fluid in der Regel ein heißes Fluid, da es sich aufgrund der exothermen Reaktion im Katalysatorbett aufwärmt. Dieses heiße Fluid ist bevorzugt das zweite Fluid im Sinne der vorliegenden Erfindung und der Wärmetausch im Plattenwärmetauscher erfolgt mit einem ersten Fluid, welches niedriger temperiert ist als das zweite Fluid.

Die Strömungsverhältnisse in dem ersten Plattenwärmetauscher können gemäß einer bevorzugten Variante der Synthesevorrichtung gemäß der Erfindung beispielsweise so sein, dass das zweite heißere Fluid aus dem Katalysatorbett von außen seitlich in den ersten Plattenwärmetauscher einströmt, durch die zweiten Zwischenräume in Querrichtung oder radial einwärts strömt, dann etwa um 90° umgelenkt wird und nach einer Abkühlung durch den Wärmetausch in Längsrichtung oder achsparallel durch die dritten Fluidkanäle aus dem Plattenwärmetauscher ausströmt. Das erste kühlere Fluid kann bei Strömung im Gegenstrom durch den ersten mittigen Fluidkanal in Längsrichtung oder axial in den Wärmetauscher eintreten, dann nach Umlenkung um etwa 90° durch die ersten Zwischenräume in Querrichtung oder radial nach außen strömen und dann nach erneuter Umlenkung um etwa 90° durch die zweiten Fluidkanäle in Längsrichtung oder achsparallel und parallel zu dem ersten Fluidkanal in einem weiter außen gelegenen Bereich nach einer Erwärmung durch den Wärmetausch aus dem Plattenwärmetauscher austreten.

Bevorzugt ist es, wenn die Synthesevorrichtung ein drittes Katalysatorbett und einen zweiten Wärmetauscher aufweist, welcher derart angeordnet ist, dass ein aus dem zweiten Katalysatorbett austretendes Produktfluid dem zweiten Wärmetauscher zur Abgabe von Wärme zuleitbar ist, und das Produktfluid nach der Abgabe der Wärme dem dritten Katalysatorbett zuleitbar ist.

Konstruktiv vorteilhaft ist es, wenn die Synthesevorrichtung eine Verteilungseinrichtung umfasst, über welche ein in dem ersten Wärmetauscher aufgewärmtes Fluid dem zweiten Wärmetauscher zuleitbar ist; und ein in dem ersten Wärmetauscher abgekühltes Fluid dem zweiten Katalysatorbett zuleitbar ist; und ein in dem zweiten Wärmetauscher aufgewärmtes Fluid dem ersten Katalysatorbett zuleitbar ist.

Ein dritter Aspekt der Erfindung betrifft ein Verfahren zur Herstellung eines Produkts, wobei das Verfahren die folgenden Schritte umfasst:
a. Bereitstellen eines Eduktstroms umfassend Reaktanden und ggf. inerte Komponenten sowie ggf. Produkt;
b. Einleiten des Eduktstroms in einen Druckbehälter;
c. Weiterleiten des Eduktstroms auf ein erstes Katalysatorbett;
d. Umsetzen zumindest eines Teils der Reaktanden des Eduktstroms auf dem ersten Katalysatorbett (9) unter Bildung eines ersten Produktstroms, umfassend Reaktanden, Produkt und ggf. Inerte; und
e. Einleiten des ersten Produktstroms in einen ersten Wärmetauscher, wobei der erste Produktstrom abgekühlt wird;
f. Weiterleiten des abgekühlten, ersten Produktstroms auf ein zweites Katalysatorbett;
g. Umsetzen zumindest eines Teils der Reaktanden des abgekühlten, ersten Produktstroms auf dem zweiten Katalysatorbett unter Bildung eines zweiten Produktstroms, umfassend Reaktanden, Produkt und ggf. Inerte;
wobei der Wärmetauscher als Plattenwärmetauscher wie oben beschrieben verwendet wird.

Bei dem erfindungsgemäßen Verfahren können dieselben Vorteile erreicht werden, wie sie bereits im Zusammenhang mit dem Plattenwärmetauscher beschrieben worden sind.

Alle bevorzugten Ausführungsformen, welche vorstehend im Zusammenhang mit der erfindungsgemäßen Synthesevorrichtung beschrieben worden sind, gelten analog auch für das erfindungsgemäße Verfahren zur Herstellung eines Produkts und werden daher nicht wiederholt.

In Schritt a) des erfindungsgemäßen Verfahrens wird ein Eduktstrom bevorzugt kontinuierlich bereitgestellt. Bevorzugt umfasst der Eduktstrom flüssige und/oder gasförmige Komponenten. Inerte Komponenten umfassen dabei solche Komponenten, welche in dem jeweiligen Verfahren inert sind. Bevorzugt umfasst der Eduktstrom Wasserstoff und Stickstoff. Zusätzlich kann der Eduktstrom als inerte Komponenten beispielsweise Methan sowie ggf. Argon und/oder ggf. Helium und als Produkt Ammoniak umfassen. Bevorzugt umfasst der Eduktstrom Wasserstoff und Stickstoff im molaren Verhältnis von 3:1. Bevorzugt beträgt der Druck des Eduktstroms im Bereich von 90 bis 400 bar.

In Schritt b) des erfindungsgemäßen Verfahrens wird der Eduktstrom in einen Druckbehälter eingeleitet. Bevorzugt wird der Edukstrom über einen Einlass in den Druckbehälter eingeleitet, welcher bevorzugt am oberen Ende des Druckbehälters angeordnet ist.

In Schritt c) wird der Eduktstrom auf das erste Katalysatorbett weitergeleitet.

In Schritt d) wird zumindest ein Teil der Reaktanden unter Bildung eines Produktstroms umfassend Reaktanden, Produkt und ggf. inerte Komponenten umgesetzt. Bevorzugt ist der Produktstrom unmittelbar nach der Umsetzung wärmer als der Eduktstrom unmittelbar vor der Umsetzung. Dies kann beispielsweise dadurch bedingt sein, dass die zugrunde liegende Umsetzung exotherm verläuft. Bevorzugt liegt die Temperatur des Produktstroms unmittelbar nach der Umsetzung im Bereich von 420°C bis 550°C. Bevorzugt liegt die Temperaturdifferenz zwischen Eduktstrom und Produktstrom unmittelbar nach der Umsetzung im Bereich von 50°C bis 400°C. Der Produktstrom umfasst bevorzugt Ammoniak sowie Reaktanden. In einer bevorzugten Ausführungsform umfasst der Eduktstrom Wasserstoff und Stickstoff sowie ggf. inerte Komponenten und der Produktstrom Ammoniak, Wasserstoff und Stickstoff sowie ggf. inerte Komponenten.

In Schritt e) des erfindungsgemäßen Verfahrens wird der Produktstrom in dem erstem Wärmetauscher abgekühlt. Bevorzugt wird der Produktstrom derart abgekühlt, dass die Temperatur des Produktstroms nach dem Abkühlen höchstens 450°C beträgt, bevorzugter höchstens 400°C, höchstens 350°C, oder höchstens 300°C.

In Schritt f) wird der Produktstrom nach dem Durchströmen des ersten Wärmetauschers in ein zweites Katalysatorbett eingeleitet.

In Schritt g) wird zumindest ein Teil der Reaktanden des Produktstroms unter Bildung eines zweiten Produktstroms umfassend Reaktanden, Produkt und ggf. inerte Komponenten umgesetzt. Bevorzugt ist der weitere Produktstrom unmittelbar nach der Umsetzung wärmer als der Produktstrom unmittelbar vor der Umsetzung. Dies kann beispielsweise dadurch bedingt sein, dass die zugrunde liegende Umsetzung exotherm verläuft. Bevorzugt liegt die Temperatur des weiteren Produktstroms unmittelbar nach der Umsetzung im Bereich von 420°C bis 550°C. Bevorzugt liegt die Temperaturdifferenz zwischen Produktstrom unmittelbar vor der Umsetzung und dem weiteren Produktstrom unmittelbar nach der Umsetzung im Bereich von 50°C bis 400°C. Der weitere Produktstrom umfasst bevorzugt Ammoniak sowie Wasserstoff, Stickstoff und ggf. inerte Komponenten wie beispielsweise Argon, Methan und ggf. Helium.

Bevorzugt wird in einem dem Schritt d) vorausgehenden, zusätzlichen Schritt des erfindungsgemäßen Verfahrens der Eduktstrom in einem Wärmetauscher vorgewärmt. Bevorzugt wird der Eduktstrom auf eine Temperatur von mindestens 275°C vorgewärmt, bevorzugter auf eine Temperatur von mindestens 320°C, mindestens 340°C, mindestens 360°C, mindestens 380°C oder mindestens 400°C. Der Wärmetauscher ist bevorzugt im Strömungsweg des Eduktstroms zwischen dem Einlass des Druckbehälters und einem Katalysatorbett angeordnet und befindet sich insbesondere nicht innerhalb des Katalysatorbettes. Bevorzugt wird der Eduktstrom in demselben Wärmetauscher vorgewärmt, in welchem der Produktstrom in Schritt e) abgekühlt wird. Insofern kann die Reaktionswärme des aus dem ersten Katalysatorbett ausströmenden Produktstroms auf den Eduktstrom übertragen werden.

Bevorzugt wird der Plattenwärmetauscher im Gegenstrom durchströmt. Bevorzugt strömt dann der Eduktstrom als *"kälteres"* Fluid über den ersten Fluidkanal in den Plattenwärmetauscher, durchströmt die Zwischenräume der ersten Gruppe radial vom ersten Fluidkanal zu den zweiten Fluidkanälen, also bevorzugt von innen nach außen, und verlässt den Plattenwärmetauscher bevorzugt über die zweiten Fluidkanäle. Bevorzugt strömt der Produktstrom als *"wärmeres"* Fluid über die seitlichen Einströmöffnungen in die Zwischenräume der zweiten Gruppe, durchströmt diese bevorzugt radial von außen nach innen, und verlässt den Plattenwärmetauscher über die dritten Fluidkanäle.

In einer anderen bevorzugten Ausführungsform ist der Wärmetauscher als Plattenwärmetauscher ausgebildet und wird im Gleichstrom durchströmt. Bevorzugt strömt dann der Eduktstrom als *"kälteres"* Fluid über die zweiten Fluidkanäle in den Plattenwärmetauscher, durchströmt die Zwischenräume der ersten Gruppe radial von den zweiten Fluidkanälen zu dem ersten Fluidkanal, also bevorzugt radial von außen nach innen, und verlässt den Plattenwärmetauscher über den ersten Fluidkanal. Bevorzugt strömt der Produktstrom als *"wärmeres"* Fluid über die seitlichen Einströmöffnungen in die Zwischenräume der zweiten Gruppe, durchströmt diese bevorzugt radial von außen nach innen, und verlässt den Plattenwärmetauscher über die dritten Fluidkanäle.

Bedingt durch die spezifischen Gegebenheiten bei einer Ammoniak-Synthese ist eine Begrenzung der Plattentemperaturen auf einen Bereich deutlich unterhalb der Gasaustrittstemperaturen aus den Katalysatorbetten wünschenswert. Dabei liegen die Gasaustrittstemperaturen aus den Katalysatorbetten bei einer Ammoniak-Synthese typischerweise im Bereich von 420°C bis 550°C. Bevorzugt wird daher der erfindungsgemäße Plattenwärmetauscher bei einer Ammoniak-Synthese im Gleichstrom durchströmt, um die Plattentemperatur gering zu halten.

Gemäß einer bevorzugten Ausgestaltung weist das Verfahren zusätzlich folgende Schritte auf:
h) Einleiten des zweiten Produktstroms in einen zweiten Wärmetauscher, wobei der zweite Produktstrom abgekühlt wird;
g) Weiterleiten des abgekühlten, zweiten Produktstroms auf ein drittes Katalysatorbett.

Bevorzugt ist der zweite Wärmetauscher ebenfalls als ein oben beschriebener Plattenwärmetauscher ausgebildet.

Die erfindungsgemäße Vorrichtung ist besonders geeignet zur Durchführung des erfindungsgemäßen Verfahrens. Ein weiterer Aspekt der Erfindung betrifft daher die Verwendung der erfindungsgemäßen Vorrichtung in dem erfindungsgemäßen Verfahren.

Weitere Vorteile, Merkmale und Einzelheiten der Erfindung sollen nachfolgend anhand der in den Zeichnungen dargestellten Ausführungsbeispiele erläutert werden.
Fig. 1 zeigt einen Plattenwärmetauscher gemäß einem Ausführungsbeispiel der Erfindung in einer Schnittdarstellung entlang einer zu den Platten des Plattenwärmetauschers parallel ausgerichteten Schnittebene.
Fig. 2 zeigt den Plattenwärmetauscher nach Figur 1 in einer schematischen Schnittdarstellung entlang einer zu den Platten des Plattenwärmetauschers senkrecht ausgerichteten Schnittebene zur Veranschaulichung einer Strömungsführung gemäß dem Gegenstromprinzip.
Fig. 3 zeigt den Plattenwärmetauscher nach Figur 1 in einer schematischen Schnittdarstellung entlang einer zu den Platten des Plattenwärmetauschers senkrecht ausgerichteten Schnittebene zur Veranschaulichung einer Strömungsführung gemäß dem Gleichstromprinzip.
Fig. 4 zeigt eine Synthesevorrichtung mit zwei Katalysatorbetten und einem Plattenwärmetauscher gemäß einem Ausführungsbeispiel der Erfindung zur Veranschaulichung einer Strömungsführung gemäß dem Gegenstromprinzip.
Fig. 5 zeigt eine Synthesevorrichtung mit zwei Katalysatorbetten und einem Plattenwärmetauscher gemäß einem Ausführungsbeispiel der Erfindung zur Veranschaulichung einer Strömungsführung gemäß dem Gleichstromprinzip.
Fig. 6 zeigt eine Synthesevorrichtung mit drei Katalysatorbetten und zwei Plattenwärmetauschern gemäß einem Ausführungsbeispiel der Erfindung.
Fig. 7 zeigt einen beispielhaften Temperaturverlauf der Fluidströme in der Synthesevorrichtung gemäß Fig. 6.
Fig. 8 zeigt einen Plattenwärmetauscher gemäß einem Ausführungsbeispiel der Erfindung mit einem Quenchfluideinlass in einer schematischen, perspektivischen Darstellung.
Fig. 9 zeigt den Plattenwärmetauscher gemäß Fig. 8 in einer Schnittdarstellung entlang einer zu den Platten des Plattenwärmetauschers senkrecht ausgerichteten Schnittebene zur Veranschaulichung der Strömungsführung.
Fig. 10 zeigt einen beispielhaften Temperaturverlauf der Fluidströme in einer Synthesevorrichtung mit einem Plattenwärmetauscher gemäß Fig. 8 und 9.
Fig. 11 zeigt eine Synthesevorrichtung mit drei Katalysatorbetten und zwei Plattenwärmetauschern gemäß einem weiteren Ausführungsbeispiel der Erfindung.
Fig. 12 zeigt einen beispielhaften Temperaturverlauf der Fluidströme in der Synthesevorrichtung gemäß Fig. 11.
Fig. 13 zeigt eine Verteilungseinrichtung der Synthesevorrichtung gemäß Fig. 6 in einer schematischen Schnittdarstellung.
Fig. 14, 15 und 16 zeigen verschiedene Elemente der Verteilungseinrichtung gemäß Fig. 13.

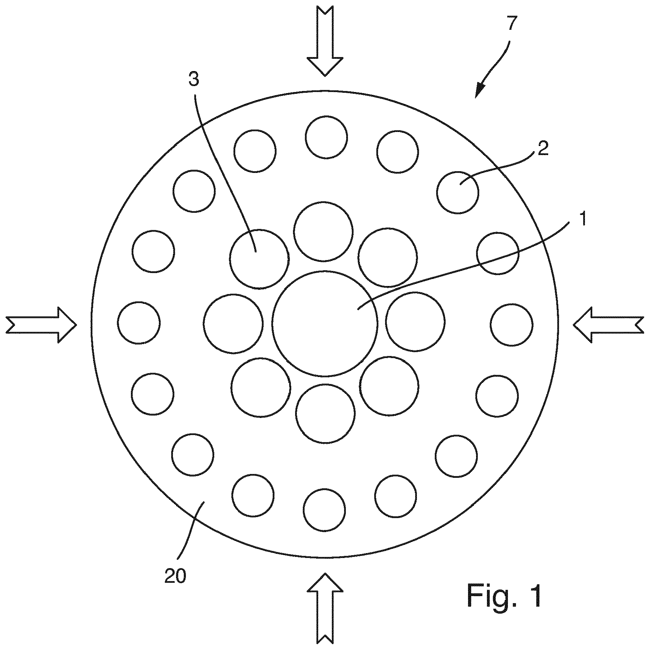

In Fig. 1 ist ein Plattenwärmetauscher 7 gemäß einem Ausführungsbeispiel der Erfindung mit einer im Wesentlichen zylindrischen Geometrie gezeigt. Der Plattenwärmetauscher kann aber auch beispielsweise im Umriss eckig sein. Alternativ wird gemäß weiteren Varianten der Erfindung durch eine Gruppe von mehreren Plattenwärmetauschern insgesamt eine etwa zylindrische oder eckige Anordnung geschaffen, wie sie in Figur 1 durch nur einen Plattenwärmetauscher bereitgestellt wird. Der Plattenwärmetauscher 7 weist einen ersten Fluidkanal 1 auf, welcher zentral entlang der Längsachse des Plattenwärmetauschers 7 senkrecht zu den einzelnen Platten 20 des Plattenwärmetauschers 7 angeordnet ist. Der erste Fluidkanal 1 weist einen kreisförmigen Querschnitt auf. Weiterhin sind bei dem Plattenwärmetauscher zweite 2 und dritte 3 Fluidkanäle vorgesehen. Die zweiten 2 und dritten 3 Fluidkanäle verlaufen senkrecht zu den Platten 20 und sind parallel zueinander ausgerichtet. Bevorzugt sind die zweiten Fluidkanäle 2 im Bereich des Außenrands der Platten 20 des Plattenwärmetauschers 7 angeordnet. Die dritten Fluidkanäle 3 sind bevorzugt um den ersten Fluidkanal 1 herum angeordnet. Die zweiten Fluidkanäle 2 und die dritten Fluidkanäle 3 sind jeweils auf einem Kreisbogen angeordnet, dessen Mittelpunkt mit einer Längsachse des ersten Fluidkanals 1 zusammenfällt. Der Querschnitt der zweiten Fluidkanäle 2 und der dritten Fluidkanäle 3 ist kreisförmig ausgebildet. Abweichend davon, kann der Querschnitt der zweiten Fluidkanäle 2 und der dritten Fluidkanäle 3 oval oder V-förmig ausgestaltet sein.

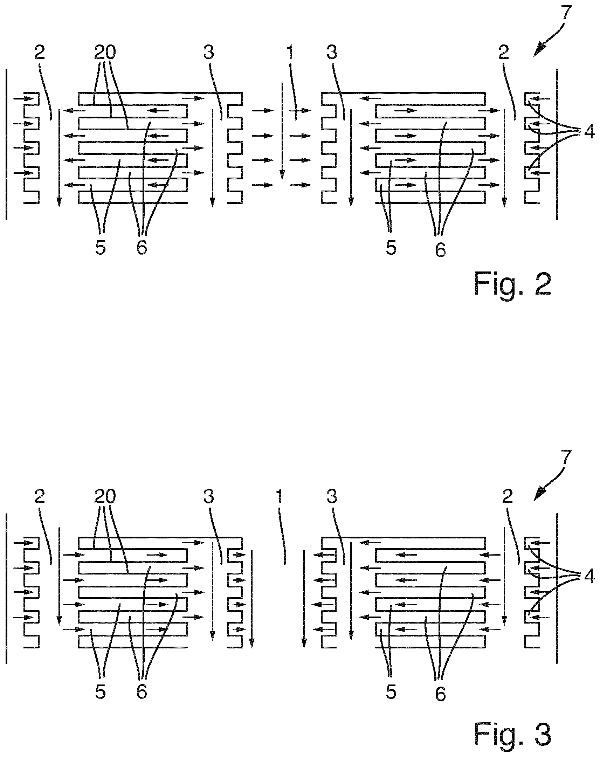

Die Strömungsverhältnisse innerhalb des Plattenwärmetauschers 7 sollen nachfolgend anhand der Darstellungen in Fig. 2 und Fig. 3 erläutert werden, wobei Fig. 2 einen Betrieb des Plattenwärmetauschers gemäß dem Gegenstromprinzip und Fig. 3 einen Betrieb gemäß dem Gleichstromprinzip zeigt. Zwischen den einzelnen Platten 20 sind durchströmbare Zwischenräume angeordnet, welche für die folgende Betrachtung in eine erste Gruppe 5 und eine zweite Gruppe 6 eingeteilt werden, wobei benachbarte Zwischenräume jeweils unterschiedlichen Gruppen 5, 6 angehören. Die durchströmbaren Zwischenräume der ersten Gruppe 5 stehen in Fluidverbindung mit dem ersten Fluidkanal 1 und sind zur Umgebung des Plattenwärmetauschers 7 hin abgedichtet. Insofern wird ein Einströmen und/oder Ausströmen eines ersten Fluids aus den Zwischenräumen der ersten Gruppe 5 in einer Richtung parallel zu den Platten 20 verhindert. Die durchströmbaren Zwischenräume der zweiten Gruppe 6 stehen mit der Umgebung des Plattenwärmetauschers 7 in Fluidverbindung und sind zu den Zwischenräumen der ersten Gruppe 5 hin abgedichtet. Um ein Einströmen eines zweiten Fluids in die Zwischenräume der zweiten Gruppe 6 aus einer parallel zu den Platten 20 angeordneten Einströmrichtung zu ermöglichen, weist der Plattenwärmetauscher 7 seitliche Einströmöffnungen 4 auf.

In Fig. 2 ist die Strömungsführung innerhalb des Plattenwärmetauschers 7 skizziert, wobei der Plattenwärmetauscher 7 im Gegenstrom betrieben wird. Ein erstes kühleres Fluid strömt dabei etwa mittig und axial bzw. in Längsrichtung über den ersten Fluidkanal 1 in den Plattenwärmetauscher 7, wird dann um etwa 90° umgelenkt und durchströmt die Zwischenräume der ersten Gruppe 5 radial bzw. in Querrichtung vom ersten Fluidkanal 1 zu den zweiten Fluidkanälen 2, also von innen nach außen, und verlässt nach erneuter Umlenkung von etwa 90° den Plattenwärmetauscher 7 über die zweiten Fluidkanäle 2 wieder in Längsrichtung bzw. in achsparalleler Richtung, das heißt im äußeren Bereich in einer Richtung in etwa parallel zur Eintrittsrichtung über den ersten Fluidkanal 1. Die Zwischenräume der ersten Gruppe 5 sind dabei über den ersten Fluidkanal 1 nach Art einer Parallelschaltung verbunden, so dass sich der in dem ersten Fluidkanal 1 geführte Strom des ersten Fluids in mehrere Teilströme aufteilt. Ein zweites wärmeres Fluid strömt über die seitlichen Einströmöffnungen 4 in die Zwischenräume der zweiten Gruppe 6, durchströmt diese radial oder in Querrichtung von außen nach innen, und verlässt nach Umlenkung von etwa 90° den Plattenwärmetauscher 7 über die dritten Fluidkanäle 3 in Längsrichtung und etwa parallel zu dem ersten Fluidkanal. Auch die Zwischenräume der zweiten Gruppe 6 sind über die dritten Fluidkanäle 3 nach Art einer Parallelschaltung verbunden, so dass das zweite Fluid aus verschiedenen Zwischenräumen der zweiten Gruppe 6 in die gemeinsamen dritten Fluidkanäle 3 geleitet wird. Zwischen den oben beschriebenen Strömungswegen des kühleren ersten Fluids und denjenigen des heißeren zweiten Fluids besteht innerhalb des Plattenwärmetauschers keine Strömungsverbindung, so dass eine Vermischung der Fluide im Plattenwärmetauscher 7 ausgeschlossen ist. Außerdem ist der Plattenwärmetauscher für das erste Fluid im Bereich der zweiten Fluidkanäle 2 nach außen hin geschlossen, so dass dort ein Austreten des ersten Fluids in Querrichtung oder radial nach außen hin ausgeschlossen ist. Hingegen sind die Zwischenräume der zweiten Gruppe 6 für ein Einströmen des zweiten Fluids von seitlich außen her offen, wie man durch die Pfeile in Figur 2 erkennen kann.

In Fig. 3 ist die Strömungsführung innerhalb des Plattenwärmetauschers 7 skizziert, wobei der Plattenwärmetauscher 7 im Gleichstrom betrieben wird. Im Gleichstrombetrieb strömt das erste Fluid dabei über die zweiten Fluidkanäle 2 in Längsrichtung oder achsparallel in den Plattenwärmetauscher 7, durchströmt nach Umlenkung um etwa 90° die Zwischenräume der ersten Gruppe 5 in Querrichtung oder radial von den zweiten Fluidkanälen 2 zu dem ersten Fluidkanal 1, also von außen nach innen, und verlässt nach erneuter Umlenkung um etwa 90° den Plattenwärmetauscher 7 über den ersten Fluidkanal 1 in Längsrichtung oder axial. Die Zwischenräume der ersten Gruppe 5 sind dabei über den ersten Fluidkanal 1 nach Art einer Parallelschaltung verbunden. Das zweite Fluid strömt über die seitlichen Einströmöffnungen 4 in die Zwischenräume der zweiten Gruppe 6, durchströmt diese in Querrichtung oder radial von außen nach innen, und verlässt nach Umlenkung um etwa 90° den Plattenwärmetauscher 7 über die dritten Fluidkanäle in Längsrichtung oder achsparalleler Richtung 3. Auch die Zwischenräume der zweiten Gruppe 6 sind über die dritten Fluidkanäle 3 nach Art einer Parallelschaltung verbunden. Diese Variante der Verfahrensführung hat, insbesondere wenn es sich bei der Synthesevorrichtung um einen Ammoniakkonverter handelt, den Vorteil, dass die aus dem Plattenwärmetauscher austretenden Gase, sowohl das abkühlende als auch das aufwärmende, anschließend in das Katalysatorbett strömen. Dort gibt es einen engen Temperaturbereich, in dem die Reaktion grundsätzlich möglich ist (beispielsweise von mehr als 380 °C), ohne dass der Katalysator Schaden nimmt.

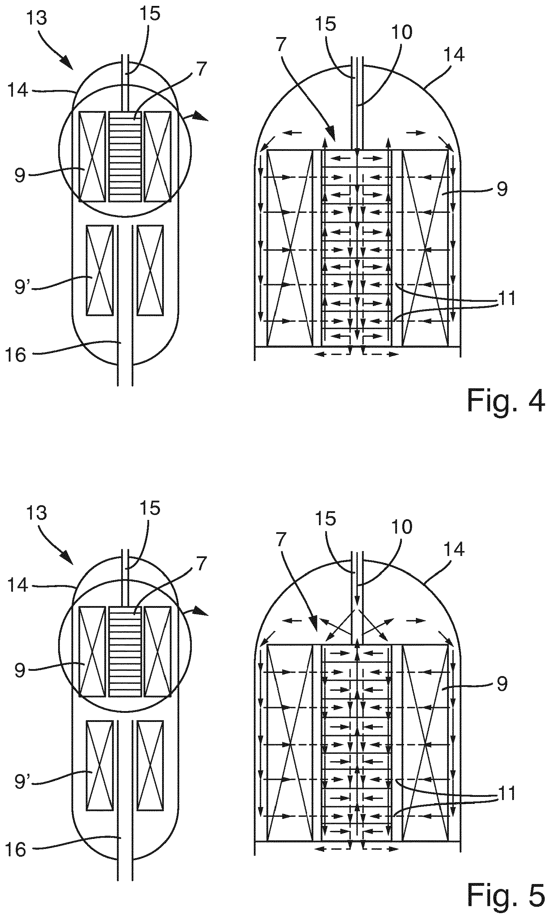

Die Fig. 4 und die Fig. 5 zeigten jeweils eine als Ammoniakkonverter ausgebildete Synthesevorrichtung mit einen Druckbehälter 14. Innerhalb des Druckbehälters 14 ist ein erstes Katalysatorbett 9 und ein zweites Katalysatorbett 9' angeordnet. Die Katalysatorbetten 9, 9' sind zylinderringförmig, d.h. hohlzylindrisch, ausgebildet. Das zweite Katalysatorbett 9' ist unterhalb des ersten Katalysatorbetts 9 angeordnet. Beide Katalysatorbetten 9, 9' sind konzentrisch zu einer Längssachse des Druckbehälters 14. Über einen an der Oberseite des Druckbehälters 14 angeordnet Einlass 15 kann ein Eduktstrom 10 umfassend Reaktanden und ggf. inerte Komponenten sowie ggf. Produkt in den Druckbehälter 14 eingeleitet werden. An der Unterseite des Druckbehälters 14 ist ein Auslass 16 zum Abziehen eines Produktstroms vorgesehen. Innerhalb des Druckbehälters 14 ist ein als Plattenwärmetauscher ausgebildeter erster Wärmetauscher 7 derart angeordnet, dass ein aus dem ersten Katalysatorbett 9 austretendes Produktfluid 11 dem ersten Wärmetauscher 7 zur Abgabe von Wärme zuleitbar ist, und nach der Abgabe der Wärme in dem Wärmetauscher 7 dem zweiten Katalysatorbett 9' zuleitbar ist. Das erste Katalysatorbett 9 umgibt den Plattenwärmetauscher 7 konzentrisch.

Bei dem in Fig. 4 gezeigten Ausführungsbeispiel einer Synthesevorrichtung 13 wird der Plattenwärmetauscher 7 im Gegenstrombetrieb verwendet. Der Eduktstrom 10 strömt durch den Einlass 15 unmittelbar in den ersten Fluidkanal 1 des Plattenwärmetauschers 7. Der Eduktstrom durchströmt danach die Zwischenräume der ersten Gruppe 5 des Wärmetauschers 7 radial von innen nach außen, wobei der Eduktstrom 10 bevorzugt auf etwa 380°C vorgewärmt wird. Der so vorgewärmte Eduktstrom wird über die zweiten Fluidkanäle 2 des Plattenwärmetauschers 7 nach oben aus dem Plattenwärmetauscher 7 geführt und in einen Spaltraum zwischen der Innenwand des in dem Druckbehälters 14 und dem ersten Katalysatorbett 9 eingeleitet. Der vorgewärmte Eduktstrom durchströmt das erste Katalysatorbett 9 radial von außen nach innen. Dabei findet bevorzugt eine exotherme Reaktion unter Bildung eines Produktstroms 11 statt. Bevorzugt verlässt der Produktstrom 11 das Katalysatorbett 9 mit einer Temperatur von höchstens 525°C. Der Produktstrom wird über die seitlichen Einlassöffnungen 4 in die Zwischenräume der zweiten Gruppe 6 des Plattenwärmetauschers 7 eingeleitet. Der Produktstrom 11 durchströmt die Zwischenräume der zweiten Gruppe 6 radial von außen nach innen und wird dabei abgekühlt. Der so abgekühlte Produktstrom wird über die dritten Fluidkanäle 3 aus dem Plattenwärmetauscher 7 abgezogen und in das zweite Katalysatorbett 9' geleitet. Das zweite Katalysatorbett 9' wird bevorzugt radial von außen nach innen durchströmt, wobei ein weiterer Teil der im Produktstrom enthaltenden Edukte zu Produkt umgesetzt werden. Bevorzugt verlässt der so gebildete zweite Produktstrom 12 die Synthesevorrichtung 13 durch den im unteren Bereich des Druckbehälters 14 angeordneten Auslass 16.

Bei dem in Fig. 5 gezeigten Ausführungsbeispiel einer Synthesevorrichtung 13 wird der Plattenwärmetauscher 7 im Gleichstrombetrieb verwendet. Der Eduktstrom 10 strömt in die zweiten Fluidkanäle 2 des Plattenwärmetauschers 7. Der Eduktstrom durchströmt danach die Zwischenräume der ersten Gruppe 5 des Wärmetauschers 7 radial von außen nach innen, wobei der Eduktstrom 10 bevorzugt auf etwa 380°C vorgewärmt wird. Der so vorgewärmte Eduktstrom wird über den gemeinsamen ersten Fluidkanal 1 des Plattenwärmetauschers 7 nach oben aus dem Plattenwärmetauscher 7 geführt und in einen Spaltraum zwischen der Innenwand des Druckbehälters 14 und dem ersten Katalysatorbett 9 eingeleitet. Der vorgewärmte Eduktstrom durchströmt das erste Katalysatorbett 9 radial von außen nach innen. Dabei findet bevorzugt eine exotherme Reaktion unter Bildung eines Produktstroms 11 statt. Bevorzugt verlässt der Produktstrom 11 das Katalysatorbett 9 mit einer Temperatur von höchstens 525°C. Der Produktstrom 11 wird über die seitlichen Einlassöffnungen 4 in die Zwischenräume der zweiten Gruppe 6 des Plattenwärmetauschers 7 eingeleitet. Der Produktstrom durchströmt die Zwischenräume der zweiten Gruppe 6 radial von außen nach innen und wird dabei abgekühlt. Der so abgekühlte Produktstrom wird über die dritten Fluidkanäle 3 aus dem Plattenwärmetauscher 7 abgezogen und in das zweite Katalysatorbett 9' geleitet. Das zweite Katalysatorbett 9' wird bevorzugt radial von außen nach innen durchströmt, wobei ein weiterer Teil der im Produktstrom enthaltenden Edukte zu Produkt umgesetzt werden. Bevorzugt verlässt der so gebildete zweite Produktstrom 12 die Synthesevorrichtung 13 durch den im unteren Bereich des Druckbehälters 14 angeordneten Auslass 16.

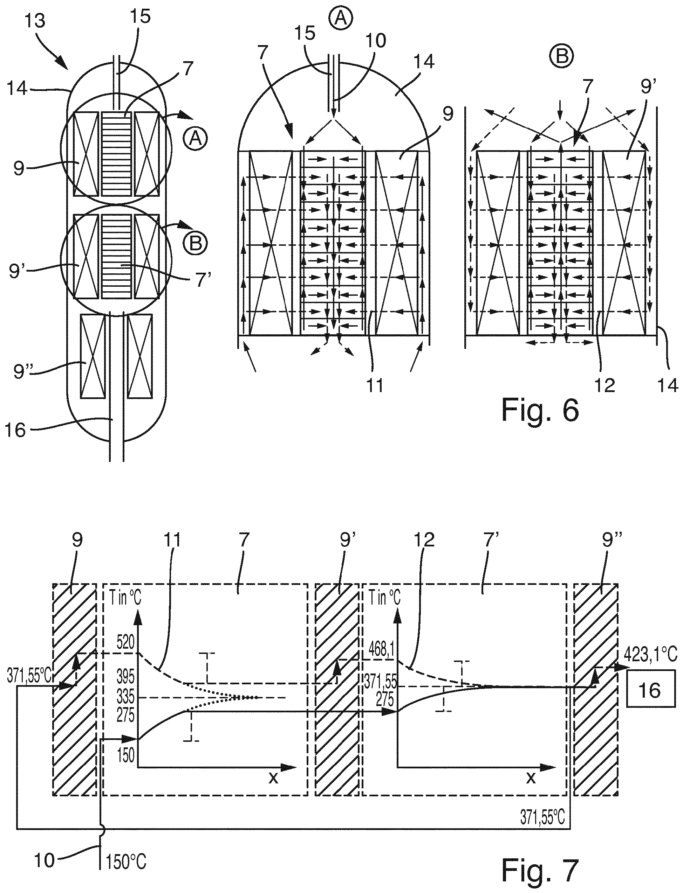

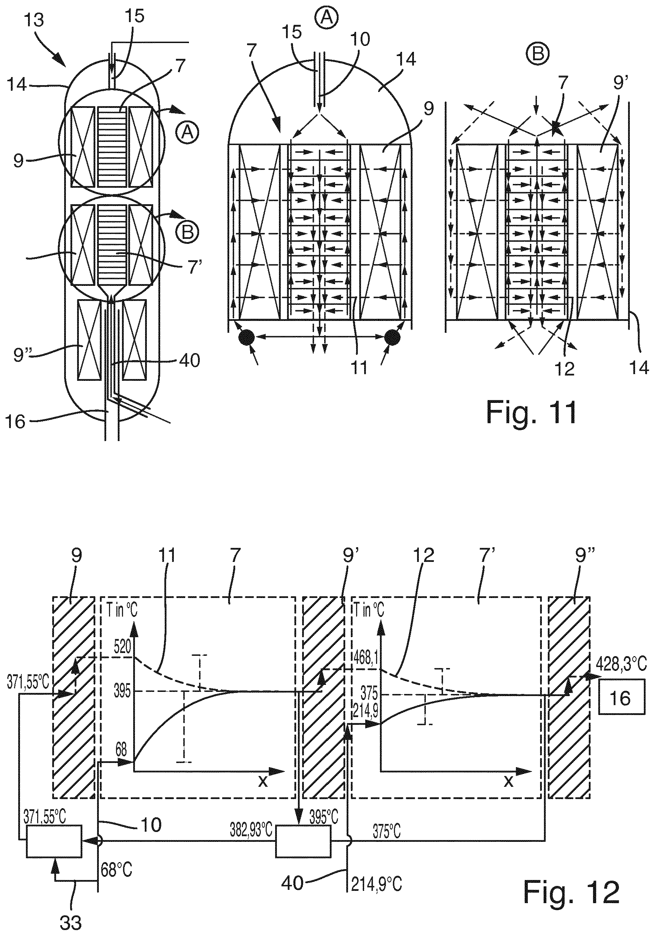

Die Fig. 6 und die Fig. 11 zeigten jeweils eine als Ammoniakkonverter ausgebildete Synthesevorrichtung mit einen Druckbehälter 14 gemäß weiteren Ausführungsbeispielen der Erfindung. Innerhalb des Druckbehälters 14 sind ein erstes Katalysatorbett 9, ein zweites Katalysatorbett 9' und ein drittes Katalysatorbett 9" angeordnet. Die Katalysatorbetten 9, 9', 9" sind zylinderringförmig, d.h. hohlzylindrisch, ausgebildet. Das zweite Katalysatorbett 9' ist unterhalb des ersten Katalysatorbetts 9 angeordnet. Das dritte Katalysatorbett 9" ist unterhalb des zweiten Katalysatorbetts 9' angeordnet. Alle Katalysatorbetten 9, 9', 9" sind konzentrisch zu einer Längssachse des Druckbehälters 14. Über einen an der Oberseite des Druckbehälters 14 angeordnet Einlass 15 kann ein Eduktstrom 10 umfassend Reaktanden und ggf. inerte Komponenten sowie ggf. Produkt in den Druckbehälter 14 eingeleitet werden. An der Unterseite des Druckbehälters 14 ist ein Auslass 16 zum Abziehen eines Produktstroms vorgesehen. Innerhalb des Druckbehälters 14 ist ein als Plattenwärmetauscher ausgebildeter erster Wärmetauscher 7 derart angeordnet, dass ein aus dem ersten Katalysatorbett 9 austretendes Produktfluid 11 dem ersten Wärmetauscher 7 zur Abgabe von Wärme zuleitbar ist, und nach der Abgabe der Wärme in dem Wärmetauscher 7 dem zweiten Katalysatorbett 9' zuleitbar ist. Das erste Katalysatorbett 9 umgibt den ersten Plattenwärmetauscher 7 konzentrisch. Zudem ist in dem Druckbehälter 14 ein zweiter Wärmetauscher 7' vorgesehen, welcher derart angeordnet ist, dass ein aus dem zweiten Katalysatorbett 9' austretendes Produktfluid dem zweiten Wärmetauscher 7' zur Abgabe von Wärme zuleitbar ist, und das Produktfluid nach der Abgabe der Wärme dem dritten Katalysatorbett 9" zuleitbar ist. Das zweite Katalysatorbett 9' ist konzentrisch um den zweiten Plattenwärmetauscher 7' angeordnet.

Bei dem in Fig. 6 gezeigten Ausführungsbeispiel einer Synthesevorrichtung 13 werden die beiden Plattenwärmetauscher 7, 7' im Gleichstrombetrieb verwendet. Der Temperaturverlauf der Fluidströme in der Synthesevorrichtung 13 ist der Darstellung in Fig. 7 zu entnehmen. Der Eduktstrom 10 strömt in die zweiten Fluidkanäle 2 des ersten Plattenwärmetauschers 7. Der Eduktstrom durchströmt danach die Zwischenräume der ersten Gruppe 5 des ersten Plattenwärmetauschers 7 radial von außen nach innen, wobei der Eduktstrom 10 bevorzugt auf etwa 275°C vorgewärmt wird. Der so vorgewärmte Eduktstrom wird über den gemeinsamen ersten Fluidkanal 1 des ersten Plattenwärmetauschers 7 nach unten aus dem ersten Plattenwärmetauscher 7 geführt und dem zweiten Plattenwärmetauscher 7' zugeleitet. Der vorgewärmte Eduktstrom tritt in die zweiten Fluidkanäle 2 des zweiten Plattenwärmetauschers 7' ein. Der Eduktstrom durchströmt danach die Zwischenräume der ersten Gruppe 5 des zweiten Plattenwärmetauschers 7' radial von außen nach innen, wobei der Eduktstrom 10 bevorzugt auf etwa 371 °C vorgewärmt wird. Der so vorgewärmte Eduktstrom wird über den gemeinsamen ersten Fluidkanal 1 des zweiten Plattenwärmetauschers 7' nach oben aus dem zweiten Plattenwärmetauscher 7' geführt und dem in einen Spaltraum zwischen der Innenwand des Druckbehälters 14 und dem ersten Katalysatorbett 9 eingeleitet. Der vorgewärmte Eduktstrom durchströmt das erste Katalysatorbett 9 radial von außen nach innen. Dabei findet bevorzugt eine exotherme Reaktion unter Bildung eines ersten Produktstroms 11 statt. Bevorzugt verlässt der erste Produktstrom 11 das Katalysatorbett 9 mit einer Temperatur von höchstens 525°C. Der erste Produktstrom 11 wird über die seitlichen Einlassöffnungen 4 in die Zwischenräume der zweiten Gruppe 6 des ersten Plattenwärmetauschers 7 eingeleitet. Der Produktstrom durchströmt die Zwischenräume der zweiten Gruppe 6 radial von außen nach innen und wird dabei abgekühlt. Der so abgekühlte Produktstrom wird über die dritten Fluidkanäle 3 aus dem ersten Plattenwärmetauscher 7 abgezogen und in das zweite Katalysatorbett 9' geleitet. Das zweite Katalysatorbett 9' wird bevorzugt radial von außen nach innen durchströmt, wobei ein weiterer Teil der im Produktstrom enthaltenden Edukte zu Produkt umgesetzt werden. Bevorzugt verlässt der so gebildete zweite Produktstrom 12 das Katalysatorbett 9' mit einer Temperatur von höchstens 525°C, bevorzugt von höchstens 500°C. Der zweite Produktstrom 12 wird über die seitlichen Einlassöffnungen 4 in die Zwischenräume der zweiten Gruppe 6 des zweiten Plattenwärmetauschers 7' eingeleitet. Der zweite Produktstrom 12 durchströmt die Zwischenräume der zweiten Gruppe 6 radial von außen nach innen und wird dabei abgekühlt. Der so abgekühlte Produktstrom wird über die dritten Fluidkanäle 3 aus dem zweiten Plattenwärmetauscher 7' abgezogen und dem dritten Katalysatorbett 9" zugeführt. Das dritte Katalysatorbett 9" wird bevorzugt radial von außen nach innen durchströmt, wobei ein weiterer Teil der im Produktstrom enthaltenden Edukte zu Produkt umgesetzt werden. Bevorzugt verlässt der so gebildete dritte Produktstrom das dritte Katalysatorbett 9" mit einer Temperatur von höchstens 500°C. Bevorzugt verlässt der so gebildete dritte Produktstrom die Synthesevorrichtung 13 durch den im unteren Bereich des Druckbehälters 14 angeordneten Auslass 16.

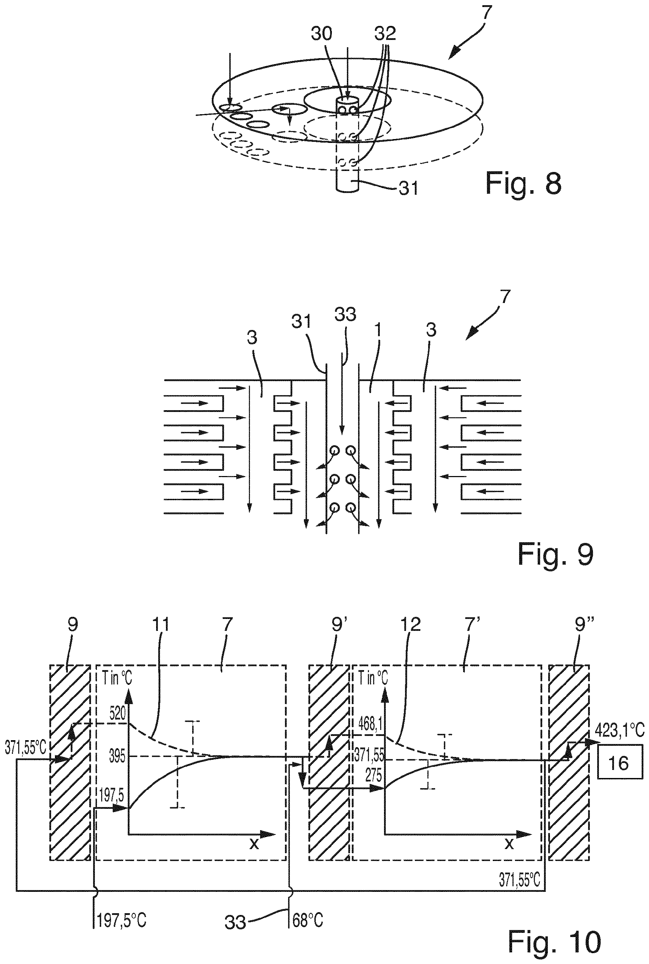

In Fig. 8 und Fig. 9 ist schematisch eine Ausgestaltung eines Plattenwärmetauschers 7 dargestellt, wobei der Plattenwärmetauscher 7 einen Einlass für das erste Fluid und einen Quenchfluideinlass 30 aufweist, über welchen ein Quenchfluid derart in den Plattenwärmetauscher 7 einleitbar ist, dass es sich innerhalb des Plattenwärmetauschers 7 mit dem ersten Fluid vermischen kann. Der Quenchfluideinlass 30 ist mit einem Quenchkanal 31 verbunden, welcher konzentrisch in dem ersten Fluidkanal 1 angeordnet ist und welcher Öffnungen 32 aufweist, durch welche das Quenchfluid in den ersten Fluidkanal 1 ausströmen kann.

Bei einer Abwandlung der in Fig. 6 gezeigten Ausgestaltung einer Synthesevorrichtung 13 ist der erste Plattenwärmetauscher 7 mit einem Quenchfluideinlass 30 ausgebildet. Wie Fig. 10 verdeutlicht, wird beim Betrieb dieser Synthesevorrichtung 13 ein Quenchfluid 33, welches eine geringere Temperatur als das in dem ersten Fluidkanal 1 des Wärmetauschers 7 strömende Fluid hat, zu dem Fluidstrom im ersten Fluidkanal 1 hinzugefügt. Die Temperatur des gemischten Fluidstroms wird dadurch verringert. Das Quenchfluid 33 und das Eduktfluid haben dieselbe Zusammensetzung. Die Steuerung der Temperatur und/oder der Massenströme kann über einen außerhalb der Synthesevorrichtung 13 angeordneten Gas-Gas-Tauscher erfolgen. Bei der in Fig. 10 verdeutlichten Auslegung der Synthesevorrichtung 13 wird das Eduktfluid 10 in dem Gas-Gas-Tauscher auf 197,5 °C aufgewärmt und dann in die Synthesevorrichtung 13 eingebracht. Das Quenchfluid 33 wird vor dem Gas-Gas-Tauscher abgezweigt und mit einer Temperatur von 68 °C durch den Quenchfluideinlass 30 eingeführt.

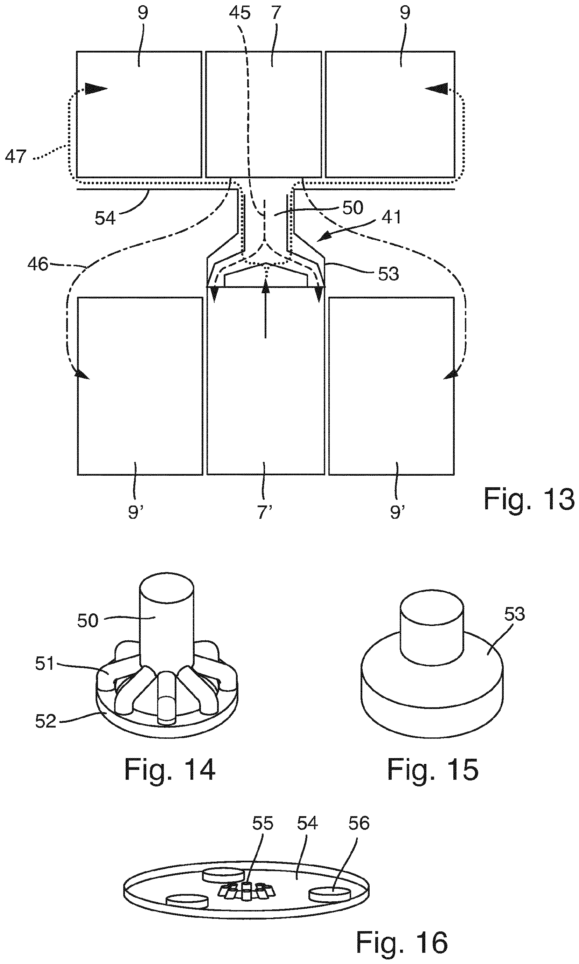

Bei dem in Fig. 11 gezeigten Ausführungsbeispiel einer Synthesevorrichtung 13 werden die beiden Plattenwärmetauscher 7, 7' im Gleichstrombetrieb verwendet. Der Temperaturverlauf der Fluidströme in der Synthesevorrichtung 13 ist der Darstellung in Fig. 12 zu entnehmen. Ein erster Eduktstrom 10 strömt in die zweiten Fluidkanäle 2 des ersten Plattenwärmetauschers 7. Der erste Eduktstrom 10 durchströmt danach die Zwischenräume der ersten Gruppe 5 des ersten Plattenwärmetauschers 7 radial von außen nach innen, wobei der erste Eduktstrom 10 bevorzugt auf etwa 395°C vorgewärmt wird. Der so vorgewärmte erste Eduktstrom wird über den gemeinsamen ersten Fluidkanal 1 des ersten Plattenwärmetauschers 7 nach unten aus dem ersten Plattenwärmetauscher 7 geführt und zunächst mit einem aus dem zweiten Plattenwärmetauscher 7' austretenden Strom sowie einem Quenchfluid 33 gemischt. Das erhaltene Gemisch wird dem ersten Katalysatorbett 9 zugeführt. Das Gemisch durchströmt das erste Katalysatorbett 9 radial von außen nach innen. Dabei findet bevorzugt eine exotherme Reaktion unter Bildung eines ersten Produktstroms 11 statt. Bevorzugt verlässt der erste Produktstrom 11 das Katalysatorbett 9 mit einer Temperatur von ca. 520°C. Der erste Produktstrom 11 wird über die seitlichen Einlassöffnungen 4 in die Zwischenräume der zweiten Gruppe 6 des ersten Plattenwärmetauschers 7 eingeleitet. Der Produktstrom durchströmt die Zwischenräume der zweiten Gruppe 6 radial von außen nach innen und wird dabei abgekühlt. Der so abgekühlte Produktstrom wird über die dritten Fluidkanäle 3 aus dem ersten Plattenwärmetauscher 7 abgezogen und in das zweite Katalysatorbett 9' geleitet. Das zweite Katalysatorbett 9' wird bevorzugt radial von außen nach innen durchströmt, wobei ein weiterer Teil der im Produktstrom enthaltenden Edukte zu Produkt umgesetzt werden. Bevorzugt verlässt der so gebildete zweite Produktstrom 12 das Katalysatorbett 9' mit einer Temperatur von höchstens 500°C, bevorzugt mit etwa 468°C. Der zweite Produktstrom 12 wird über die seitlichen Einlassöffnungen 4 in die Zwischenräume der zweiten Gruppe 6 des zweiten Plattenwärmetauschers 7' eingeleitet. Der zweite Produktstrom 12 durchströmt die Zwischenräume der zweiten Gruppe 6 radial von außen nach innen und wird dabei abgekühlt. Der so abgekühlte Produktstrom wird über die dritten Fluidkanäle 3 aus dem zweiten Plattenwärmetauscher 7' abgezogen und dem dritten Katalysatorbett 9" zugeführt. Das dritte Katalysatorbett 9" wird bevorzugt radial von außen nach innen durchströmt, wobei ein weiterer Teil der im Produktstrom enthaltenden Edukte zu Produkt umgesetzt werden. Bevorzugt verlässt der so gebildete dritte Produktstrom das dritte Katalysatorbett 9" mit einer Temperatur von höchstens 460°C, bevorzugt mit etwa 428°C. Bevorzugt verlässt der so gebildete dritte Produktstrom die Synthesevorrichtung 13 durch den im unteren Bereich des Druckbehälters 14 angeordneten Auslass 16. Ferner ist ein zweiter Einlass für einen zweiten Eduktstrom 40 vorgesehen, welcher konzentrisch innerhalb des Auslasses 16 angeordnet ist. Insofern kann ein Teil der Edukte von unten in den Druckbehälter 14 eingespeist werden. Der zweite Eduktstrom 40 strömt in die zweiten Fluidkanäle 2 des zweiten Plattenwärmetauschers 7'. Der zweite Eduktstrom 40 durchströmt danach die Zwischenräume der ersten Gruppe 5 des zweiten Plattenwärmetauschers 7' radial von außen nach innen, wobei der zweite Eduktstrom 40 bevorzugt auf etwa 375°C vorgewärmt wird. Der so vorgewärmte zweite Eduktstrom wird über den gemeinsamen ersten Fluidkanal 1 des zweiten Plattenwärmetauschers 7' nach oben aus dem zweiten Plattenwärmetauscher 7' geführt und zunächst mit dem aus dem ersten Plattenwärmetauscher 7 austretenden Strom sowie dem Quenchfluid 33 gemischt. Das Gemisch wird, wie oben bereits beschrieben dem ersten Katalysatorbett 9 zugeführt. Wie der Darstellung in Fig. 6 zu entnehmen ist, kreuzen sich im Bereich zwischen dem ersten Katalysatorbett 9 und dem zweiten Katalysatorbett 9" drei Fluidströme. Um die Ströme leiten zu können, ohne dass sich diese unerwünscht vermischen, wird eine Verteilungseinrichtung 41 verwendet, welche in Fig. 13 schematisch dargestellt ist. Über die Verteilungseinrichtung 41 ist ein in dem ersten Wärmetauscher 7 aufgewärmtes Fluid 45 dem zweiten Wärmetauscher 7 zuleitbar Ferner ist ein in dem ersten Wärmetauscher 7 abgekühltes Fluid dem zweiten Katalysatorbett 9' zuleitbar und ein in dem zweiten Wärmetauscher 7' aufgewärmtes Fluid 47 ist dem ersten Katalysatorbett 9 zuleitbar.

Die einzelnen Komponenten der Verteilungseinrichtung sind in Fig. 14, 15 und 16 gezeigt.

Das in dem ersten Wärmetauscher 7 vorgewärmte Fluid 45 teilt sich in dem in Fig. 14 gezeigten Rohrverteiler 50 auf acht Rohre 51 auf und strömt in einen Ringkanal 52. Der Ringkanal 52 wird über den Einlässen der zweiten Fluidkanäle 2 des zweiten Wärmeübertragers 7' angeordnet, so dass sich das Fluid gleichmäßig auf diese verteilen kann.

Oberhalb des Rohrverteilers 50 ist eine Haube 53 angeordnet, welche in Fig. 15 gezeigt ist. Im Bereich zwischen dem Rohrverteiler 50 und der Haube 53 kann das aus dem ersten Fluidkanal 1 des zweiten Wärmetauschers 7' austretende Fluid 45 nach oben geführt werden. Diese Fluid 45 strömt dann durch die in Fig. 16 dargestellte Verteilerkammer 54 zu dem ersten Katalysatorbett 7. In der Verteilerkammer 54 sind acht Rohre 55 angeordnet, über welche das aus dem ersten Wärmetauscher 7 austretende abgekühlte Fluid 46 in das zweite Katalysatorbett 9' strömen kann. Ferner umfasst die Verteilerkammer 54 drei Mannlöcher 56.

### Bezugszeichenliste:

- 1: erster Fluidkanal
- 2: zweite Fluidkanäle
- 3: dritte Fluidkanäle
- 4: seitliche Einströmöffnungen
- 5: durchströmbare Zwischenräume der ersten Gruppe
- 6: durchströmbare Zwischenräume der zweiten Gruppe
- 7/7': Plattenwärmetauscher
- 9/9'/9": Katalysatorbett
- 10: Eduktstrom
- 11: Produktstrom
- 12: weiterer Produktstrom
- 13: Synthesevorrichtung
- 14: Druckbehälter
- 15: Einlass
- 16: Auslass
- 20: Platte
- 30: Quenchfluideinlass
- 31: Quenchkanal
- 32: Öffnungen
- 33: Quenchfluid
- 40: Eduktstrom
- 41: Verteilungseinrichtung
- 45: Fluid
- 46: Fluid
- 47: Fluid
- 50: Rohrverteiler
- 51: Rohr
- 52: Ringkanal
- 53: Haube
- 54: Verteilerkammer
- 55: Rohre
- 56: Mannloch
- L: Längsachse

## Patentansprüche

1. Verwendung eines Plattenwärmetauschers mit mehreren Platten (20), wobei zwischen jeweils zwei benachbarten Platten (20) ein durchströmbarer Zwischenraum gebildet ist, umfassend durchströmbare Zwischenräume einer ersten Gruppe (5), die in Fluidverbindung mit einem gemeinsamen, senkrecht zu den Platten verlaufenden ersten Fluidkanal (1) stehen, wobei die Zwischenräume der ersten Gruppe (5) derart abgedichtet sind, dass ein Einströmen eines ersten Fluids von außen her und/oder ein Ausströmen dieses ersten Fluids nach außen hin in einer Richtung parallel zu den Platten (20) verhindert wird, wobei die Zwischenräume der ersten Gruppe (5) in Fluidverbindung mit mehreren, senkrecht zu den Platten (20) verlaufenden zweiten Fluidkanälen (2) stehen, die derart angeordnet sind, dass das erste Fluid die Zwischenräume der ersten Gruppe (5), ausgehend von dem ersten Fluidkanal (1), quer zu den zweiten Fluidkanälen (2) durchströmt, oder dass das erste Fluid die Zwischenräume der ersten Gruppe (5), ausgehend von den zweiten Fluidkanälen (2) quer zu dem ersten Fluidkanal (1) durchströmt, weiterhin umfassend von einem zweiten Fluid, welches anders temperiert ist als das erste Fluid, durchströmbare Zwischenräume einer zweiten Gruppe (6),
wobei die Zwischenräume der ersten Gruppe (5) und die Zwischenräume der zweiten Gruppe (6) jeweils abwechselnd angeordnet sind,
wobei die von dem zweiten Fluid durchströmbaren Zwischenräume der zweiten Gruppe (6) nach außen hin, bezogen auf den Plattenwärmetauscher, offene seitliche Einströmöffnungen (4) aufweisen, um ein Einströmen eines zweiten Fluids von außen her in die Zwischenräume der zweiten Gruppe (6) aus einer parallel zu den Platten angeordneten Einströmrichtung zu ermöglichen, **dadurch gekennzeichnet, dass** der Plattenwärmetauscher von dem ersten Fluid in den Zwischenräumen (5) der ersten Gruppe und dem zweiten Fluid in den Zwischenräumen (6) der zweiten Gruppe jeweils im Gleichstrom durchströmt wird.

2. Verwendung eines Plattenwärmetauschers gemäß Anspruch 1, **dadurch gekennzeichnet, dass** die einzelnen Platten (20) jeweils eine runde Form aufweisen.

3. Verwendung eines Plattenwärmetauschers gemäß Anspruch 2, **dadurch gekennzeichnet, dass** die Zwischenräume der ersten Gruppe (5) entlang einer äußeren Umfangslinie der runden Platten (20) abgedichtet sind.

4. Verwendung eines Plattenwärmetauschers gemäß einem der vorhergehenden Ansprüche, **dadurch gekennzeichnet, dass** die Zwischenräume der zweiten Gruppe (6) in Fluidverbindung mit mehreren, senkrecht zu den Platten (20) verlaufenden dritten Fluidkanälen (3) stehen, die derart angeordnet sind, dass das zweite Fluid die Zwischenräume der zweiten Gruppe (6), ausgehend von den nach radial außen hin offenen seitlichen Einströmöffnungen (4), radial einwärts zu den dritten Fluidkanälen (3) hin durchströmt.

5. Verwendung eines Plattenwärmetauschers gemäß einem der vorhergehenden Ansprüche, **dadurch gekennzeichnet, dass** der erste Fluidkanal (1) und/oder die zweiten Fluidkanäle (2) und/oder die dritten Fluidkanäle (3) einen kreisrunden Querschnitt aufweisen.

6. Verwendung eines Plattenwärmetauschers nach einem der Ansprüche 4 oder 5, **dadurch gekennzeichnet, dass** das zweite Fluid von radial außen her über die seitlichen Einströmöffnungen (4) in den Plattenwärmetauscher einströmt und nach dem Durchströmen der Zwischenräume der zweiten Gruppe (6) umgelenkt wird und aus dem Plattenwärmetauscher über die dritten Fluidkanäle (3) in achsparalleler Richtung, bezogen auf den Plattenwärmetauscher, aus diesem ausströmt.

7. Verwendung eines Plattenwärmetauschers nach einem der Ansprüche 4 bis 6, **dadurch gekennzeichnet, dass** der erste Fluidkanal (1) sich, bezogen auf den Plattenwärmetauscher, mittig axial durch diesen hindurch erstreckt, die zweiten Fluidkanäle (2) sich parallel zu dem ersten Fluidkanal und somit in achsparalleler Richtung, bezogen auf den Plattenwärmetauscher, im radial äußeren Bereich durch den Plattenwärmetauscher hindurch erstrecken und sich die dritten Fluidkanäle (3) in radialer Richtung gesehen zwischen dem ersten Fluidkanal (1) und den zweiten Fluidkanälen achsparallel durch den Plattenwärmetauscher hindurch erstrecken, wobei sowohl die zweiten Fluidkanäle (2) als auch die dritten Fluidkanäle (3) zur Oberseite und/oder zur Unterseite des Plattenwärmetauschers hin offen ausgebildet sind, für den jeweiligen Austritt des Fluids.

8. Verwendung eines Plattenwärmetauschers gemäß einem der vorhergehenden Ansprüche, **dadurch gekennzeichnet, dass** der Plattenwärmetauscher einen Einlass für das erste Fluid und einen Quenchfluideinlass aufweist, über welchen ein Quenchfluid derart in den Plattenwärmetauscher einleitbar ist, dass es sich innerhalb des Plattenwärmetauschers mit dem ersten Fluid vermischen kann.

9. Verwendung eines Plattenwärmetauschers gemäß Anspruch 8, **dadurch gekennzeichnet, dass** der Quenchfluideinlass mit einem Quenchkanal verbunden ist, welcher konzentrisch in dem ersten Fluidkanal angeordnet ist und welcher Öffnungen aufweist, durch welche das Quenchfluid in den ersten Fluidkanal ausströmen kann.

10. Verwendung eines Plattenwärmetauschers gemäß einem der Ansprüche 1 bis 9, **dadurch gekennzeichnet, dass** das erste Fluid eine niedrigere Temperatur aufweist als das zweite Fluid.

11. Synthesevorrichtung für exotherme Reaktionen mit heterogener Katalyse, insbesondere Ammoniaksynthesekonverter, wobei die Synthesevorrichtung (13) die folgenden Komponenten umfasst:
einen Druckbehälter (14),
ein erstes Katalysatorbett (9), welches innerhalb des Druckbehälters (14) angeordnet ist;
ein zweites Katalysatorbett, welches innerhalb des Druckbehälters (14) unterhalb des ersten Katalysatorbetts angeordnet ist; und
einen ersten Wärmetauscher (7, 8) oder eine Gruppe von ersten Wärmetauschern, welche(r) derart angeordnet ist (sind), dass ein aus dem ersten Katalysatorbett austretendes Produktfluid dem (den) ersten Wärmetauscher(n) zur Abgabe von Wärme zuleitbar ist, und nach der Abgabe der Wärme in dem (den) Wärmetauscher(n) dem zweiten Katalysatorbett zuleitbar ist;
wobei der erste Wärmetauscher oder die Gruppe von ersten Wärmetauschern als Plattenwärmetauscher nach einem der Ansprüche 1 bis 10 verwendet wird (werden),
**dadurch gekennzeichnet, dass** das erste Katalysatorbett (9) ringförmig ausgebildet ist und das erste Katalysatorbett (9) den ersten Wärmetauscher (7,8) oder die Gruppe von ersten Wärmetauschern konzentrisch umgibt.

12. Synthesevorrichtung nach einem der Ansprüche 11, **gekennzeichnet durch** ein drittes Katalysatorbett und einen zweiten Wärmetauscher oder eine Gruppe von zweiten Wärmetauschern, welcher derart angeordnet ist (sind), dass ein aus dem zweiten Katalysatorbett austretendes Produktfluid dem(n) zweiten Wärmetauscher(n) zur Abgabe von Wärme zuleitbar ist, und das Produktfluid nach der Abgabe der Wärme dem dritten Katalysatorbett zuleitbar ist.

13. Synthesevorrichtung nach Anspruch 12, **gekennzeichnet durch** eine Verteilungseinrichtung, über welche
ein in dem ersten Wärmetauscher aufgewärmtes Fluid dem zweiten Wärmetauscher zuleitbar ist; und
ein in dem ersten Wärmetauscher abgekühltes Fluid dem zweiten Katalysatorbett zuleitbar ist; und
ein in dem zweiten Wärmetauscher aufgewärmtes Fluid dem ersten Katalysatorbett zuleitbar ist.

14. Verfahren zur Herstellung eines Produkts, wobei das Verfahren die folgenden Schritte umfasst:
a) Bereitstellen eines Eduktstroms (10) umfassend Reaktanden und ggf. inerte Komponenten sowie ggf. Produkt;
b) Einleiten des Eduktstroms (10) in einen Druckbehälter;
c) Weiterleiten des Eduktstroms (10) auf ein erstes Katalysatorbett (9);
d) Umsetzen zumindest eines Teils der Reaktanden des Eduktstroms (10) auf dem ersten Katalysatorbett (9) unter Bildung eines ersten Produktstroms (11), umfassend Reaktanden, Produkt und ggf. Inerte; und
e) Einleiten des ersten Produktstroms (11) in einen ersten Wärmetauscher, wobei der erste Produktstrom (11) abgekühlt wird;
f) Weiterleiten des abgekühlten, ersten Produktstroms auf ein zweites Katalysatorbett;
g) Umsetzen zumindest eines Teils der Reaktanden des abgekühlten, ersten Produktstroms auf dem zweiten Katalysatorbett unter Bildung eines zweiten Produktstroms (12), umfassend Reaktanden, Produkt und ggf. Inerte;
**dadurch gekennzeichnet, dass** der Wärmetauscher als Plattenwärmetauscher nach einem der Ansprüche 1 bis 11 verwendet wird.

15. Verfahren nach Anspruch 14, **dadurch gekennzeichnet, dass** der Eduktstrom (10) Wasserstoff und Stickstoff umfasst und der Produktstrom (11) Ammoniak umfasst.

16. Verwendung der Synthesevorrichtung gemäß einem der Ansprüche 11 bis 13 in einem Verfahren gemäß einem der Ansprüche 14 oder 15.

## Claims

1. Use of a plate-type heat exchanger having multiple plates (20), wherein, between in each case two adjacent plates (20), an intermediate space which is able to be flowed through is formed, said heat exchanger comprising intermediate spaces of a first group (5) that are able to be flowed through and are fluidically connected to a common first fluid channel (1) running perpendicularly to the plates, wherein the intermediate spaces of the first group (5) are sealed off such that an inflow of a first fluid from the outside and/or an outflow of said first fluid to the outside in a direction parallel to the plates (20) is prevented, wherein the intermediate spaces of the first group (5) are fluidically connected to multiple second fluid channels (2) running perpendicularly to the plates (20), which second fluid channels are arranged such that, proceeding from the first fluid channel (1), the first fluid flows through the intermediate spaces of the first group (5) transversely to the second fluid channels (2), or that, proceeding from the second fluid channels (2), the first fluid flows through the intermediate spaces of the first group (5) transversely to the first fluid channel (1), and furthermore comprising intermediate spaces of a second group (6) that are able to be flowed through by a second fluid, whose temperature is controlled differently than the first fluid,
wherein the intermediate spaces of the first group (5) and the intermediate spaces of the second group (6) are in each case arranged alternately,
wherein the intermediate spaces, able to be flowed through by the second fluid, of the second group (6) have lateral inflow openings (4) which, in relation to the plate-type heat exchanger, are outwardly open, in order to allow an inflow of a second fluid from the outside into the intermediate spaces of the second group (6) from an inflow direction which is arranged parallel to the plates, **characterized in that** the plate-type heat exchanger is flowed through by the first fluid in the intermediate spaces (5) of the first group and the second fluid in the intermediate spaces (6) of the second group in each case in a co-direction-flow configuration.

2. Use of a plate-type heat exchanger according to Claim 1, **characterized in that** the individual plates (20) each have a round shape.

3. Use of a plate-type heat exchanger according to Claim 2, **characterized in that** the intermediate spaces of the first group (5) are sealed off along an outer circumferential line of the round plates (20) .

4. Use of a plate-type heat exchanger according to one of the preceding claims, **characterized in that** the intermediate spaces of the second group (6) are fluidically connected to multiple third fluid channels (3) running perpendicularly to the plates (20), which third fluid channels are arranged such that, proceeding from the radially outwardly open lateral inflow openings (4), the second fluid flows through the intermediate spaces of the second group (6) radially inwards to the third fluid channels (3) .

5. Use of a plate-type heat exchanger according to one of the preceding claims, **characterized in that** the first fluid channel (1) and/or the second fluid channels (2) and/or the third fluid channels (3) have/has a circular cross section.

6. Use of a plate-type heat exchanger according to either of Claims 4 and 5, **characterized in that** the second fluid flows from radially at the outside into the plate-type heat exchanger via the lateral inflow openings (4) and, after flowing through the intermediate spaces of the second group (6), is diverted and flows from the plate-type heat exchanger out of said heat exchanger via the third fluid channels (3) in an axially parallel direction in relation to the plate-type heat exchanger.

7. Use of a plate-type heat exchanger according to one of Claims 4 to 6, **characterized in that** the first fluid channel (1) extends centrally axially, in relation to the plate-type heat exchanger, through the latter, the second fluid channels (2) extend through the plate-type heat exchanger in the radially outer region, parallel to the first fluid channel and thus in an axially parallel direction in relation to the plate-type heat exchanger, and the third fluid channels (3) extend through the plate-type heat exchanger between the first fluid channel (1) and the second fluid channels (2), as seen in a radial direction, in an axially parallel manner, wherein both the second fluid channels (2) and the third fluid channels (3) are formed so as to be open towards the top side and/or towards the bottom side of the plate-type heat exchanger for the respective exit of the fluid.

8. Use of a plate-type heat exchanger according to one of the preceding claims, **characterized in that** the plate-type heat exchanger has an inlet for the first fluid and has a quench fluid inlet, via which a quench fluid is able to be introduced into the plate-type heat exchanger such that, within the plate-type heat exchanger, it can mix with the first fluid.

9. Use of a plate-type heat exchanger according to Claim 8, **characterized in that** the quench fluid inlet is connected to a quench channel which is arranged concentrically in the first fluid channel and which has openings through which the quench fluid can flow out into the first fluid channel.

10. Use of a plate-type heat exchanger according to one of Claims 1 to 9, **characterized in that** the first fluid has a lower temperature than the second fluid.

11. Synthesis apparatus for exothermic reactions with heterogeneous catalysis, in particular ammonia synthesis converter, wherein the synthesis apparatus (13) comprises the following components:
a pressure vessel (14),
a first catalyst bed (9), which is arranged within the pressure vessel (14);
a second catalyst bed, which is arranged within the pressure vessel (14) below the first catalyst bed; and
a first heat exchanger (7, 8) or a group of first heat exchangers, which is (are) arranged such that a product fluid exiting the first catalyst bed is able to be fed to the first heat exchanger (s) for releasing heat and, after the release of the heat in the heat exchanger(s), is able to be fed to the second catalyst bed;
wherein the first heat exchanger or the group of first heat exchangers is/are used as a plate-type heat exchanger according to one of Claims 1 to 10, **characterized in that** the first catalyst bed (9) is of annular form, and the first catalyst bed (9) concentrically surrounds the first heat exchanger (7, 8) or the group of first heat exchangers.

12. Synthesis apparatus according to one of Claims 11, **characterized by** a third catalyst bed and a second heat exchanger or a group of second heat exchangers, which is (are) arranged such that a product fluid exiting the second catalyst bed is able to be fed to the second heat exchanger(s) for releasing heat and, after the release of the heat, the product fluid is able to be fed to the third catalyst bed.

13. Synthesis apparatus according to Claim 12, **characterized by** a distribution device, via which a fluid heated in the first heat exchanger is able to be fed to the second heat exchanger; and
a fluid cooled in the first heat exchanger is able to be fed to the second catalyst bed; and
a fluid heated in the second heat exchanger is able to be fed to the first catalyst bed.

14. Method for producing a product, wherein the method comprises the following steps:
a) providing a reagent stream (10) comprising reactants and possibly inert components and also possibly product;
b) introducing the reagent stream (10) into a pressure vessel;
c) conveying the reagent stream (10) onto a first catalyst bed (9);
d) reacting at least a portion of the reactants of the reagent stream (10) on the first catalyst bed (9) to form a first product stream (11), comprising reactants, product and possibly inerts; and
e) introducing the first product stream (11) into a first heat exchanger, wherein the first product stream (11) is cooled;
f) conveying the cooled first product stream onto a second catalyst bed;
g) reacting at least a portion of the reactants of the cooled first product stream on the second catalyst bed to form a second product stream (12), comprising reactants, product and possibly inerts;
**characterized in that** the heat exchanger is used as a plate-type heat exchanger according to one of Claims 1 to 11.

15. Method according to Claim 14, **characterized in that** the reagent stream (10) comprises hydrogen and nitrogen, and the product stream (11) comprises ammonia.

16. Use of the synthesis apparatus according to one of Claims 11 to 13 in a method according to either of Claims 14 and 15.

## Revendications

1. Utilisation d'un échangeur de chaleur à plaques comprenant plusieurs plaques (20), un espace intermédiaire pouvant être parcouru par un écoulement étant formé entre deux plaques adjacentes respectives (20), lequel comprend des espaces intermédiaires d'un premier groupe (5) pouvant être parcourus par un écoulement, qui sont en liaison fluidique avec un premier canal de fluide commun (1), s'étendant perpendiculairement aux plaques, les espaces intermédiaires du premier groupe (5) étant étanchéifiés de telle sorte qu'un afflux d'un premier fluide depuis l'extérieur et/ou qu'une évacuation de ce premier fluide vers l'extérieur dans une direction parallèle aux plaques (20) soient empêchés, les espaces intermédiaires du premier groupe (5) étant en liaison fluidique avec plusieurs deuxièmes canaux de fluide (2) s'étendant perpendiculairement aux plaques (20), lesquels sont disposés de telle sorte que le premier fluide s'écoule à travers les espaces intermédiaires du premier groupe (5) à partir du premier canal de fluide (1), transversalement aux deuxièmes canaux de fluide (2), ou que le premier fluide s'écoule à travers les espaces intermédiaires du premier groupe (5) à partir des deuxièmes canaux de fluide (2) transversalement au premier canal de fluide (1), comprenant en outre des espaces intermédiaires d'un deuxième groupe (6) pouvant être parcourus par un écoulement d'un deuxième fluide qui est régulé en température différemment du premier fluide,
les espaces intermédiaires du premier groupe (5) et les espaces intermédiaires du deuxième groupe (6) étant disposés à chaque fois en alternance, les espaces intermédiaires du deuxième groupe (6) pouvant être parcourus par l'écoulement du deuxième fluide présentant, vers l'extérieur par rapport à l'échangeur de chaleur à plaques, des ouvertures d'afflux latérales ouvertes (4) afin de permettre un afflux d'un deuxième fluide depuis l'extérieur dans les espaces intermédiaires du deuxième groupe (6) à partir d'une direction d'afflux orientée parallèlement aux plaques, **caractérisée en ce que** l'échangeur de chaleur à plaques est parcouru par l'écoulement du premier fluide dans les espaces intermédiaires (5) du premier groupe et du deuxième fluide dans les espaces intermédiaires (6) du deuxième groupe à chaque fois dans le même sens.

2. Utilisation d'un échangeur de chaleur à plaques selon la revendication 1, **caractérisée en ce que** les plaques individuelles (20) présentent à chaque fois une forme ronde.

3. Utilisation d'un échangeur de chaleur à plaques selon la revendication 2, **caractérisée en ce que** les espaces intermédiaires du premier groupe (5) sont étanchéifiés le long d'une ligne périphérique extérieure des plaques rondes (20).

4. Utilisation d'un échangeur de chaleur à plaques selon l'une quelconque des revendications précédentes, **caractérisée en ce que** les espaces intermédiaires du deuxième groupe (6) sont en liaison fluidique avec plusieurs troisièmes canaux de fluide (3) s'étendant perpendiculairement aux plaques (20), lesquels sont disposés de telle sorte que le deuxième fluide s'écoule à travers les espaces intermédiaires du deuxième groupe (6), à partir des ouvertures d'afflux latérales ouvertes radialement vers l'extérieur (4), radialement vers l'intérieur vers les troisièmes canaux de fluide (3).

5. Utilisation d'un échangeur de chaleur à plaques selon l'une quelconque des revendications précédentes, **caractérisée en ce que** le premier canal de fluide (1) et/ou les deuxièmes canaux de fluide (2) et/ou les troisièmes canaux de fluide (3) présentent une section transversale ronde circulaire.

6. Utilisation d'un échangeur de chaleur à plaques selon l'une quelconque des revendications 4 et 5, **caractérisée en ce que** le deuxième fluide afflue radialement depuis l'extérieur par le biais des ouvertures d'afflux latérales (4) dans l'échangeur de chaleur à plaques et après avoir traversé les espaces intermédiaires du deuxième groupe (6), est dévié et ressort de l'échangeur de chaleur à plaques par le biais des troisièmes canaux de fluide (3) dans une direction parallèle à l'axe par rapport à l'échangeur de chaleur.

7. Utilisation d'un échangeur de chaleur à plaques selon l'une quelconque des revendications 4 à 6, **caractérisée en ce que** le premier canal de fluide (1) s'étend, par rapport à l'échangeur de chaleur à plaques, centralement axialement à travers celui-ci, les deuxièmes canaux de fluide (2) s'étendent parallèlement au premier canal de fluide et par conséquent dans la direction d'axe parallèle, par rapport à l'échangeur de chaleur à plaques, dans la région radialement extérieure à travers l'échangeur de chaleur à plaques, et les troisièmes canaux de fluide (3) s'étendent, vu dans la direction radiale, entre le premier canal de fluide (1) et les deuxièmes canaux de fluide avec leurs axes parallèles à travers l'échangeur de chaleur à plaques, les deuxièmes canaux de fluide (2) ainsi que les troisièmes canaux de fluide (3) étant réalisés de manière ouverte vers le côté supérieur et/ou vers le côté inférieur de l'échangeur de chaleur à plaques, pour la sortie respective du fluide.

8. Utilisation d'un échangeur de chaleur à plaques selon l'une quelconque des revendications précédentes, **caractérisée en ce que** l'échangeur de chaleur à plaques présente une entrée pour le premier fluide et une entrée de fluide d'extinction, par le biais de laquelle un fluide d'extinction peut être introduit dans l'échangeur de chaleur à plaques, de telle sorte qu'il puisse se mélanger avec le premier fluide à l'intérieur de l'échangeur de chaleur à plaques.

9. Utilisation d'un échangeur de chaleur à plaques selon la revendication 8, **caractérisée en ce que** l'entrée de fluide d'extinction est connectée à un canal d'extinction qui est disposé concentriquement dans le premier canal de fluide et qui présente des ouvertures à travers lesquelles le fluide d'extinction peut s'écouler dans le premier canal de fluide.

10. Utilisation d'un échangeur de chaleur à plaques selon l'une quelconque des revendications 1 à 9, **caractérisée en ce que** le premier fluide présente une plus basse température que le deuxième fluide.

11. Dispositif de synthèse pour réactions exothermiques avec catalyse hétérogène, en particulier convertisseur de synthèse d'ammoniaque, le dispositif de synthèse (13) comprenant les composants suivants :
un récipient sous pression (14),
un premier lit de catalyseur (9) qui est disposé à l'intérieur du récipient sous pression (14) ;
un deuxième lit de catalyseur qui est disposé à l'intérieur du récipient sous pression (14) en dessous du premier lit de catalyseur ; et
un premier échangeur de chaleur (7, 8) ou un groupe de premiers échangeurs de chaleur qui est/sont disposés de telle sorte qu'un fluide de produit sortant du premier lit de catalyseur puisse être acheminé au(x) premier(s) échangeur(s) de chaleur pour diffuser de la chaleur, et après la diffusion de la chaleur dans le ou les échangeurs de chaleur, puisse être acheminé au deuxième lit de catalyseur ;
le premier échangeur de chaleur ou le groupe de premiers échangeurs de chaleur étant utilisé(s) en tant qu'échangeur de chaleur à plaques selon l'une quelconque des revendications 1 à 10,
**caractérisé en ce que** le premier lit de catalyseur (9) est réalisé sous forme annulaire et le premier lit de catalyseur (9) entoure concentriquement le premier échangeur de chaleur (7, 8) ou le groupe de premiers échangeurs de chaleur.

12. Dispositif de synthèse selon l'une des revendications 11, **caractérisé par** un troisième lit de catalyseur et un deuxième échangeur de chaleur ou un groupe de deuxièmes échangeurs de chaleur, qui est/sont disposés de telle sorte qu'un fluide de produit sortant du deuxième lit de catalyseur puisse être acheminé au(x) deuxième(s) échangeur(s) de chaleur pour diffuser de la chaleur, et que le fluide de produit puisse être acheminé après la diffusion de la chaleur au troisième lit de catalyseur.

13. Dispositif de synthèse selon la revendication 12, **caractérisé par** un dispositif de distribution par le biais duquel un fluide chauffé dans le premier échangeur de chaleur peut être acheminé au deuxième échangeur de chaleur ; et
un fluide refroidi dans le premier échangeur de chaleur peut être acheminé au deuxième lit de catalyseur ; et
un fluide chauffé dans le deuxième échangeur de chaleur peut être acheminé au premier lit de catalyseur.

14. Procédé de fabrication d'un produit, le procédé comprenant les étapes suivantes :
a) fourniture d'un courant d'éduit (10) comprenant des réactifs et éventuellement des composants inertes ainsi qu'éventuellement un produit ;
b) introduction du courant d'éduit (10) dans un récipient sous pression ;
c) guidage du courant d'éduit (10) vers un premier lit de catalyseur (9) ;
d) conversion d'au moins une partie des réactifs du courant d'éduit (10) sur le premier lit de catalyseur (9) en formant un premier courant de produit (11) comprenant des réactifs, le produit et éventuellement des composants inertes ; et
e) introduction du premier courant de produit (11) dans un premier échangeur de chaleur, le premier courant de produit (11) étant refroidi ;
f) guidage du premier courant de produit refroidi vers un deuxième lit de catalyseur ;
g) conversion d'au moins une partie des réactifs du premier courant de produit refroidi sur le deuxième lit de catalyseur en formant un deuxième courant de produit (12) comprenant des réactifs, le produit et éventuellement des composants inertes ;
**caractérisé en ce que** l'échangeur de chaleur est utilisé en tant qu'échangeur de chaleur à plaques selon l'une quelconque des revendications 1 à 11.

15. Procédé selon la revendication 14, **caractérisé en ce que** le courant d'éduit (10) comprend de l'hydrogène et de l'azote et le courant de produit (11) comprend de l'ammoniaque.

16. Utilisation du dispositif de synthèse selon l'une quelconque des revendications 11 à 13 dans un procédé selon l'une quelconque des revendications 14 et 15.
